# EUROPÄISCHE PATENTSCHRIFT

(11) **EP 1 857 348 B1**
(45) Veröffentlichungstag und Bekanntmachung des Hinweises auf die Patenterteilung: **27.04.2011**
(21) Anmeldenummer: 07009459.4
(22) Anmeldetag: 11.05.2007
(51) Int. Cl.: B62D 6/00, B62D 113/00, B62D 137/00

(54) **Verfahren zum kennlinien- oder kennfeldabhängigen Variieren der Winkelübersetzung zwischen einem Lenkradwinkel eines Lenkrads und dem Radlenkwinkel der für die Fahrzeuglenkung verantwortlichen Räder eines Kraftfahrzeugs mit einem aktiven Lenksystem**
Method for varying angle conversion depending on the characteristic curve or characteristic zone between the steering wheel and the wheel guide angle of the wheels used in steering a motor vehicle with an active steering system
Procédé destiné à la variation en fonction d'une courbe caractéristique ou d'une carte de l'accouplement de la translation angulaire entre un angle du volant et l'angle du moment des roues responsables de l'orientation d'un véhicule automobile doté d'un système de guidage actif

(30) Priorität: 19.05.2006 DE 102006023562
(43) Veröffentlichungstag der Anmeldung: 21.11.2007
(73) Patentinhaber: AUDI AG, 85045 Ingolstadt (DE)
(72) Erfinder: Gründinger, Bernhard, 84051 Essenbach (DE); Dick, Wolfgang, 85055 Ingolstadt (DE)
(74) Vertreter: Thielmann, Frank

(56) Entgegenhaltungen:
- EP-A- 1 371 541
- EP-A- 1 449 744
- EP-A- 1 481 875

## Beschreibung

Die Erfindung betrifft ein Verfahren zum kennlinien- oder kennfeldabhängigen Variieren der Winkelübersetzung zwischen einem Lenkradwinkel eines Lenkrads und dem Randlenkwinkel der für die Fahrzeuglenkung verantwortlichen Räder eines Kraftfahrzeugs mit einem aktiven Lenksystem mit einer über eine Steuerungseinrichtung gesteuerten Einrichtung zum Einstellen des Radlenkwinkels in Abhängigkeit des Lenkradwinkels; wobei die Steuerungseinrichtung die Einrichtung zum Einstellen des Radlenkwinkels in Abhängigkeit wenigstens zweier Kennlinien, denen unterschiedliche Winkelübersetzungen zwischen dem Lenkradwinkel und dem Radlenkwinkel zugeordnet sind, steuert, und wobei vom Fahrer manuell oder automatisch eine der Kennlinien auswählbar ist. Ein derartiges Verfahren ist aus der EP-A-1371541 bekannt.

Moderne Kraftfahrzeuge ermöglichen eine vom Fahrer wählbare dynamische Veränderung des Fahrverhaltens, das heißt, die das Fahrverhalten beeinflussenden Fahrzeugkomponenten wie Fahrwerk und Lenksystem werden je nach gewünschtem Fahrverhalten mit entsprechenden Parametern über die zugeordneten Steuergeräte angesteuert. Üblicherweise besteht für den Fahrer die Möglichkeit, zwischen einem ruhigeren, gemäßigten "Komfort"-Verhalten auf ein agileres, direkteres "Sport"-Verhalten über einen entsprechenden Wählschalter umzuschalten. Dies führt dazu, dass die jeweils von der Umschaltung betroffenen Steuergeräte entsprechende andere Kennlinien zur Steuerung der ihnen zugeordneten Betriebskomponenten abarbeiten.

Im Rahmen einer damit verbundenen Fahrverhaltensänderung wird beispielsweise das Lenksystem des Kraftfahrzeugs beeinflusst. Bei aktiven Lenksystemen kann dabei je nach gewählter Kennlinie oder gewähltem Kennfeld die Winkelübersetzung zwischen dem Lenkraddrehwinkel und dem tatsächlich erreichten Radlenkwinkel der Gestalt variiert werden, dass je nach Modus unterschiedlich große Lenkwinkel zu ein und dem selben Radlenkwinkel führen. Im "Sport"-Modus ist dabei zur Erzielung eines direkteren Lenkverhaltens ein kleinerer Lenkraddrehwinkel zur Einstellung eines bestimmten Radlenkwinkels erforderlich als im "Komfort"-Modus, wo der Fahrer das Lenkrad etwas weiter drehen muss, um den gleichen Radlenkwinkel zu erhalten.

Innerhalb der aktiven Lenksysteme werden üblicherweise Systeme mit mechanischer Kopplung zwischen dem Lenkrad und dem Lenkaktuator an der Achse sowie Steer-by-Wire-Lenksysteme ohne mechanische Kopplung zwischen Lenkrad und Lenkaktuator an der Achse unterschieden. Das mechanisch gekoppelte System wird auch als Überlagerungslenksystem bezeichnet, wobei als Überlagerungsgetriebe üblicherweise Planetengetriebe oder Harmonic-Drive-Getriebe unterschieden werden. Bei einem Überlagerungslenksystem mit Planetengetriebe ist dem mit der Lenksäule und damit dem Lenkrad gekoppelten Planetengetriebe ein Stellmotor zugeordnet, der mit einem mit dem Planetengetriebe gekoppelten Hohlrad zusammenwirkt, und über den ein Zusatzwinkel zum vom Lenkrad gegebenen Lenkwinkel addiert oder subtrahiert werden kann, über den letztlich die mechanische Lenkradbewegung zur Einstellung der endgültigen Radauslenkung, mithin also das Winkelübersetzungsverhältnis zwischen Lenkrad und Radauslenkung variiert werden kann. Die Einstellung des richtigen Stellmotorwinkels bezüglich des Lenkradwinkels und des gewünschten Vorderradwinkels hängt von der angestrebten Gesamtübersetzung, die letztlich kennlinien- oder kennfeldabhängig ist, und deren Differenz zur rein mechanischen Übersetzung bei gesperrtem Stellmotor ab. Ist beispielsweise der vom Fahrer gegebene Lenkradwinkel nicht groß genug, um den gewünschten Vorderrad- oder Hinterradlenkwinkel zu erreichen, muss folglich mit Hilfe des Stellmotors über die Hohlwelle der fehlende Zusatzwinkel hinzuaddiert werden, während im umgekehrten Fall, wenn der vom Fahrer eingegebene Lenkwinkel zu groß ist, der Stellmotor über das Hohlrad den überschüssigen Winkel abziehen muss, um den gewünschten Vorderrad- oder Hinterwinkel zu erreichen. In ähnlicher Weise erfolgt eine unterstützte Lenkung in Verbindung mit einem Harmonic-Drive-Getriebe, wo ebenfalls die Möglichkeit zur Eingabe eines Zusatzwinkels, der das Übersetzungsverhältnis definiert, gegeben ist, wie auch bei einem Steer-by-Wire-System, wo keine mechanische Kopplung, sondern lediglich eine elektrische oder hydraulische Kopplung zwischen Lenkrad und Lenkradaktuator gegeben ist. Bei diesen Systemen wird die Lenkeingabe des Fahrers über einen Lenkradaktuator erfasst und auf elektrischem oder elektrohydraulischem Weg über einen Achssteller in eine Radbewegung übertragen.

Wie beschrieben liegen dem "Komfort"-Modus und dem "Sport"-Modus beziehungsweise den zugeordneten Kennlinien oder Kennfeldern separate, unterschiedliche Winkelübersetzungen zwischen Lenkradwinkel und Radlenkwinkel zugrunde. Während im "Komfort"-Modus ein größerer Lenkradwinkel zum Erreichen eines bestimmten Radlenkwinkels benötigt wird, ist im "Sport"-Modus ein kleinerer Lenkradwinkel zur Einstellung des gleichen Radlenkwinkels erforderlich. Die entsprechende Ansteuerung beispielsweise des Stellmotors eines Planetengetriebes eines Überlagerungsgetriebes erfolgt in Abhängigkeit der gewählten Kennlinie bzw. des Kennfelds über eine entsprechende Steuerungseinrichtung.

Wird nun während der Fahrt eine Modusumschaltung beispielsweise vom Fahrer selbst vorgenommen, ist infolge der angewählten, zukünftig abzuarbeitenden Kennlinie bzw. des gewählten Kennfelds zwangsläufig auch die Winkelübersetzung zwischen Lenkradwinkel und Radlenkwinkel zu ändern. Da die Lenkübersetzung eine der sicherheitskritischten Größen im Fahrzeug ist, ist eine abrupte Änderung der Lenkwinkelübersetzung, die je nach gegebener Situation sogar zu einer "Selbstlenkung" führen kann, wenn infolge der Nachstellung eine aktive Änderung des Radlenkwinkels erforderlich wäre, nicht immer möglich. Sie ist insbesondere dann nicht möglich, wenn die Räder aus der Null-Stellung ausgelenkt sind, mithin also gerade eine Kurve befahren wird. Sofern sich das Lenkrad in der Null-Stellung befindet, kann eine sofortige abrupte Übersetzungsänderung erfolgen, beziehungsweise eine nachfolgende Lenkbewegung automatisch unter Verwendung der Übersetzungsverhältnisse, wie sie über die neu gewählte Kennlinie bzw. das Kennfeld definiert sind, unterstützt werden. Bei einer Umschaltung während einer Kurvenfahrt wäre eine Umschaltung ohne eine für den Fahrer spürbare Verhaltensbeeinflussung, die er infolge der abrupt geänderten Lenkfunktion unmittelbar merkt, nur dann durchführbar, wenn der Fahrer aus der gegebenen Lenkradstellung zwingend einen Null-Durchgang durchführt. Dies erfolgt aber häufig nicht zeitnah zum Betätigen des Kennlinien- oder Kennfeldwahlschalters, sondern kann, je nachdem, wie lange die Kurvenfahrt dauert, zum Teil deutlich verzögert erfolgen. Der Fahrer möchte jedoch die beispielsweise durch Anwahl des "Sport"-Modus zugeordnete straffere, direkte Lenkung möglichst zeitnah zur Verfügung haben.

Der Erfindung liegt damit das Problem zugrunde, ein Verfahren anzugeben, das eine möglichst zeitnahe Umschaltung der Lenkübersetzung zwischen zwei Übersetzungskennlinien ohne zwingenden Null-Durchgang im Lenkrad und ohne negative Fahrverhaltensbeeinflussung ermöglicht.

Zur Lösung dieses Problems ist bei einem Verfahren der eingangs genannten Art erfindungsgemäß vorgesehen, dass nach Auswahl einer der weiteren Steuerung zugrunde zu legenden Kennlinie oder eines Kennfelds bei gegebener Auslenkung des Lenkrads aus der Nullstellung die Einrichtung zum Einstellen des Radlenkwinkels in Abhängigkeit der erfassten Lenkradbewegung des nach dem Auswählen der Kennlinie oder des Kennfelds bewegten Lenkrads oder einer nach dem Auswählen der Kennlinie oder des Kennfelds erfassten Zeitspanne zur schrittweisen oder linearen Veränderung der Winkelübersetzung von der der vormals gewählten Kennlinie oder dem vormals gewählten Kennfeld zugeordneten Winkelübersetzung auf die der neu gewählten Kennlinie oder dem neu gewählten Kennfeld zugeordnete Winkelübersetzung angesteuert wird.

Das erfindungsgemäße Verfahren schlägt eine in einer ersten Alternative schrittweise Änderung der Winkelübersetzung, mithin also eine schrittweise Synchronisation mit Anwahl einer neue der Steuerung zugrunde zu legende Kennlinie oder einem neuen Kennfeld vor, wobei diese schrittweise Veränderung in einer Alternativausgestaltung in Abhängigkeit der erfassten Lenkradbewegung während der Kurvenfahrt erfolgt. Während einer Kurvenfahrt steht das Lenkrad üblicherweise nicht still, sondern der Fahrer korrigiert häufig die Fahrzeugspur, um die Kurve für seine Verhältnisse optimal zu befahren. Diese Lenkradbewegungen sind nun die auslösenden Momente für die schrittweise Veränderung der Winkelübersetzung von einem Übersetzungsverhältnis zum anderen Übersetzungsverhältnis, das heißt, die Änderung erfolgt inkrementell in Abhängigkeit der einzelnen Lenkbewegungen bei ausgelenktem Lenkrad und nicht wie bisher im Stand der Technik abrupt und schlagartig von einem Übersetzungsverhältnis auf das andere. Es erfolgt also eine stufenweise Synchronisation, bis das Winkelübersetzungsverhältnis vollständig angepasst ist.

Diese Vorgehensweise lässt zum einen eine zeitnahe Umschaltung zu, denn bei einem Umschalten der Kennlinie/des Kennfelds bei gegebener Kurvenfahrt kann unmittelbar mit Betätigen des Wählschalters mit der schrittweisen Synchronisation in Abhängigkeit der Lenkbewegung begonnen werden. Ein zwingend durchzuführender Null-Durchgang zur Umschaltung der Übersetzungsverhältnisse ist damit zwangsläufig nicht mehr erforderlich. Darüber hinaus wird durch die sukzessive schrittweise Umschaltung das Fahrverhalten beziehungsweise Lenkverhalten nur inkrementell und folglich für den Fahrer nicht negativ erfahrbar geändert, das heißt, er merkt keine abrupten Verhaltensänderungen bis hin zur Gefahr eines "Selbstlenkers", vielmehr erfolgt eine kontinuierliche Nachführung, wobei als Regelparameter die erfasste Lenkradbewegung des ohnehin ausgelenkten Lenkrads dient. Befindet sich das Lenkrad bei Betätigen des Kennlinien- oder Kennfeldwahlschalters in der Null-Stellung, so kann eine sofortige Umschaltung erfolgen, das heißt, der nachfolgenden Lenkradbewegung liegen bereits die der neu gewählten Kennlinie oder des Kennfelds zugeordneten Übersetzungsverhältnisse zugrunde.

Alternativ zur schrittweisen Veränderung der Winkelübersetzung ist es auch denkbar, das Übersetzungsverhältnis linear zu variieren. Dies insbesondere, wenn die zweite Alternativausgestaltung zur Synchronisierung, nämlich die Synchronisierung in Abhängigkeit einer nach dem Auswählen der Kennlinie oder des Kennfelds erfassten Zeitspanne realisiert ist. Hier erfolgt also keine zwangsläufig von einer Lenkradbewegung abhängige Synchronisation, sondern eine zeitabhängige Synchronisation. Auf diese zeitabhängige Synchronisation wird nachfolgend noch näher eingegangen.

Eine besonders vorteilhafte Erfindungsausgestaltung sieht vor, die Lenkradbewegung in Form der Lenkradwinkelinkremente zu erfassen und die Einrichtung in Abhängigkeit der Lenkradwinkelinkremente anzusteuern. Zum Zeitpunkt der Betätigung des Wahlschalters befindet sich das Lenkrad in einer ersten Winkelstellung, aus der heraus das Lenkrad zur Korrektur der Fahrspur in die eine oder andere Richtung bewegt wird. Zu verschiedenen Zeitpunkten werden nun die Lenkradinkremente jeweils bezogen auf die Lenkradstellung zum vorherigen Erfassungszeitpunkt bestimmt. Je nachdem, wie groß die Winkelinkremente sind, kann zu jedem Inkrement ein von der Größe des jeweiligen Lenkwinkelinkrements abhängiger Synchronisationsschritt erfolgen.

Die Anpassung der Übersetzung erfolgt in Abhängigkeit der tatsächlichen Lenkbewegungen, also in Abhängigkeit der Winkeländerungen des Lenkrads während der Kurvenfahrt. Dabei werden die Lenkradwinkelinkremente bevorzugt kontinuierlich aufsummiert, wobei für eine komplette Umschaltung eine vorbestimmte Lenkradwinkelinkrementensumme aufsummiert werden muss. Ist diese erreicht, wurde also das von Haus aus ausgelenkte Lenkrad während der gegebenen Kurvenfahrt über die Korrekturlenkbewegungen mehrfach bewegt und ergibt die Summe dieser Lenkwinkel den vorbestimmten Summenwert, beispielsweise 30°, so ist damit ein vollständiger Übersetzungsübergang erreicht.

Dabei können nach einer besonders vorteilhaften Weiterbildung der Erfindung zum schrittweisen Verändern der Winkelübersetzung nur solche Lenkradbewegungen oder Lenkwinkelinkremente verwendet werden, die in eine vorbestimmte Bewegungsrichtung erfolgen beziehungsweise eine Lenkradbewegung in eine vorbestimmte Bewegungsrichtung beschreiben. Das heißt, es finden nur solche Lenkradbewegungen Berücksichtung, die beispielsweise "in die Kurve hinein" erfolgen, bei der mithin also korrigierend in die Kurve gelenkt wird, während Lenkbewegungen zum Zurücklenken "aus der Kurve" unberücksichtigt bleiben. Es werden also in diesem Sinne nur "positive" Lenkwinkelinkremente summiert, die aus "positiven" Lenkbewegungen in die Kurve hinein resultieren, während "negative" Lenkwinkelinkremente resultierend aus einer Lenkbewegung aus der Kurve heraus nicht berücksichtigt werden und mithin auch nicht zu einem Anpassungsschritt führen. In entsprechender Weise bildet sich die Lenkwinkelinkrementensumme auch nur aus den tatsächlich berücksichtigten Lenkwinkelinkrementen.

Dabei werden zweckmäßigerweise bei einer Änderung von der Kennlinie oder dem Kennfeld mit der größeren Winkelübersetzung, im beschriebenen Beispiel also der "Komfort"-Kennlinie/-Kennfeld auf die Kennlinie oder das Kennfeld mit der kleineren Winkelübersetzung, hier also die "Sport"-Kennlinie/ -Kennfeld, nur Lenkradbewegungen oder Lenkwinkelinkremente berücksichtigt, die den Radlenkwinkel vergrößern, also nur solche Bewegungen oder Inkremente, die gegeben sind, wenn in die Kurve eingelenkt wird. Im umgekehrten Fall werden bei einer Änderung von der Kennlinie oder dem Kennfeld mit der kleineren Winkelübersetzung ("Sport"-Kennlinie/-Kennfeld) auf die Kennlinie oder das Kennfeld mit der größeren Winkleübersetzung ("Komfort"-Kennlinie/-Kennfeld) nur Lenkradbewegungen oder Lenkwinkelinkremente berücksichtigt, die den Radlenkwinkel verkleinern, wenn also aus der Kurve herausgelenkt wird.

Eine vorteilhafte Weiterbildung der Erfindung sieht vor, dass die für eine vollständige Änderung der Winkelübersetzung zu erreichende Summe der kontinuierlich aufsummierten erfassten Lenkradwinkelinkremente bei einer Änderung von der Kennlinie oder dem Kennfeld mit der kleineren Winkelübersetzung auf die Kennlinie oder dem Kennfeld mit der größeren Winkelübersetzung größer ist als bei einer Änderung von der Kennlinie oder dem Kennfeld mit der größeren Winkelübersetzung auf die Kennlinie oder das Kennfeld mit der kleineren Winkelübersetzung. Das heißt, bei einem Umschalten von der "Komfort"-Kennlinie/-Kennfeld auf die "Sport"-Kennlinie/-Kennfeld geht die Umschaltung schneller vonstatten, weil diesem Wechsel eine niedrigere Winkelinkrementsumme zugeordnet ist, mithin also durch die korrigierenden Lenkbewegungen diese die vollständige Umschaltung definierende Summe schneller erreicht wird, als bei einem Umschalten von der "Sport"-Kennlinie/ - Kennfeld auf die "Komfort"-Kennlinie/-Kennfeld.

Wie bereits beschrieben kann alternativ zur Synchronisation in Abhängigkeit einer Lenkradbewegung, beispielsweise über die Erfassung der Lenkradwinkelinkremente, auch eine zeitabhängige Synchronisation auf Basis einer nach erfolgter Auswahl einer Kennlinie oder eines Kennfelds erfassten Zeitspanne, die über ein entsprechendes Zeitglied erfasst wird, erfolgen. Eine erste Erfindungsausgestaltung sieht hier vor, dass nach erfolgter Auswahl einer neuen Kennlinie oder eines neuen Kennfelds die Veränderung der Winkelübersetzung innerhalb einer vorbestimmten Zeitspanne erfolgt. Für die Synchronisation ist also ein definiertes Zeitfenster vorgesehen, innerhalb welchem der komplette Umschaltvorgang vonstatten geht. Dieses Zeitfenster oder die Zeitspanne kann für eine Umschaltung vom "Sport"-Modus in den "Komfort"-Modus länger sein, beispielsweise 3 - 5 Sekunden betragen, während eine Umschaltzeitspanne bei einem Wechsel vom "Komfort"-Modus in den "Sport"-Modus, wo der Wechsel deutlich schneller erfolgen soll, beispielsweise nur 0,5 - 2 Sekunden betragen kann. Innerhalb dieser definierten Zeitspanne, die gegebenenfalls benutzer- oder werkstattseitig variierbar ist, kann bevorzugt ein linearer Übersetzungswechsel erfolgen, denkbar ist aber grundsätzlich auch eine schrittweise Umschaltung. Bei dieser Erfindungsausgestaltung ist also stets ein zeitlich gesehen definiertes Umschaltverhalten realisiert.

Ähnlich wie bei der einleitend beschriebenen Erfindungsalternative unter Verwendung der Lenkradwinkelinkremente ist es auch bei einer zeitabhängigen Synchronisation möglich, die Zeitspanne in Form einzelner Zeitinkremente über ein geeignetes Zeitglied zu erfassen und die Einrichtung in Abhängigkeit der aufsummierten Zeitinkremente anzusteuern. Auch hier wird die Umschaltung in Abhängigkeit der aufsummierten Zeitinkremtensumme schrittweise vonstatten gehen, je nachdem, wie die Summenbildung zeitlich gesehen abläuft. Das heißt, der gesamte Umschaltvorgang ist in seiner Gesamtdauer letztlich variabel und abhängig davon, wie schnell die gegebene Maximalsumme über die einzelnen aufsummierten Zeitinkremente erreicht wird. Dabei kann auch hier eine Abhängigkeit der zur Aufsummierung verwendeten Zeitinkremente von einer bestimmten Richtung der Lenkradbewegung erfolgen, wie dies auch bei der Summation der Lenkwinkelinkremente wie einleitend beschrieben wurde realisiert ist. Zur schrittweisen Veränderung der Winkelübersetzung können erfindungsgemäß auch hier nur solche Zeitinkremente verwendet werden, während welcher eine Lenkradbewegung einer vorbestimmten Richtung erfolgt. Eine Änderung von der Kennlinie oder dem Kennfeld mit der größeren Winkelübersetzung auf die Kennlinie oder das Kennfeld mit der kleineren Winkelübersetzung können auch hier nur solche Zeitinkremente berücksichtigt werden, die aus Lenkradbewegungen resultieren, die den Radlenkwinkel vergrößern, während bei einer Änderung von der Kennlinie oder dem Kennfeld mit der kleineren Winkelübersetzung auf die Kennlinie oder das Kennfeld mit der größeren Winkelübersetzung nur solche Zeitinkremente berücksichtigt werden, die aus Lenkradbewegungen resultieren, die den Radlenkwinkel verkleinern. Die Richtungsabhängigkeit ist also genauso wie bei einer Synchronisation auf Basis der Lenkwinkelinkremente.

Auch bei der Zeitinkrementensynchronisation kann die für eine vollständige Änderung der Winkelübersetzung zu erreichende Summe der kontinuierlich aufsummierten erfassten Zeitinkremente bei einer Änderung von der Kennlinie oder dem Kennfeld mit der kleineren Winkelübersetzung auf die Kennlinie oder das Kennfeld mit der größeren Winkelübersetzung größer sein als bei einer umgekehrten Änderung.

In Weiterbildung der Erfindung kann vorgesehen sein, dass die Veränderung der Winkelübersetzung gegebenenfalls zusätzlich in Abhängigkeit der Geschwindigkeit der Lenkbewegung und/oder der Fahrzeuggeschwindigkeit und/oder des absoluten Lenkwinkels erfolgt. Diese beiden Parameter bilden zusätzliche Faktoren, die beispielsweise im Rahmen der Summenbildung der Lenkwinkelinkremente oder Zeitinkremente berücksichtigt werden. Sie stellen quasi eine Alternative zu einer zusätzlich zu berücksichtigen Komponente zur Richtungsabhängigkeit der verwendbaren Inkremente dar. Denkbar ist es beispielsweise, bei größerer Fahrgeschwindigkeit die Synchronisation quasi zu verzögern, also über einen fahrzeuggeschwindigkeitsabhängigen Faktor das Summationsergebnis der Lenkwinkel- oder Zeitinkremente dahingehend zu beeinflussen, dass der Zielsummenwert langsamer erreicht wird, als bei geringerer Fahrgeschwindigkeit. Dies kann beispielsweise durch geeignete fahrgeschwindigkeitsabhängige Faktoren, mit denen die einzelnen Inkremente oder die vorab gebildeten Inkrementsummen multipliziert, also gewichtet werden, erfolgen. Bei einer Abhängigkeit von der Geschwindigkeit der Lenkbewegung, mithin also der Geschwindigkeit der Lenkraddrehung, kann die Summenbildung, mithin also der Umschaltvorgang, beschleunigt werden, wenn das Lenkrad schneller gedreht wird, während er durch Berücksichtigung eines geeigneten Gewichtungsfaktors bei geringeren Lenkraddrehgeschwindigkeiten verzögert werden kann.

In jedem Fall erfolgt im Rahmen des Umschaltvorgangs stets ein Vergleich des aktuell gebildeten Summenwerts mit dem vorgegebenen maximalen Summenwert und eine Ermittlung des Verhältnisses zwischen beiden Werten, wonach dieses ermittelte Verhältnis auf den aktuellen Kennlinienunterschied übertragen bzw. auf das Verhältnis zwischen den beiden Kennlinien umgerechnet wird, um dann entsprechend anzusteuern.

Bei einer Umschaltung von "Komfort" nach "Sport" soll die Übersetzung schneller zur Verfügung stehen, ohne dabei Sprünge oder große Gradientenveränderungen in die falsche Richtung im Radlenkwinkel zu erzeugen. Mit der dazu benötigten Winkelinkrementsumme kann die Spürbarkeit dieses Anpasseffektes eingestellt werden. Je größer die zugeordnete Summe ist, umso weniger ist das Umschalten spürbar, je kleiner sie ist, umso stärker ist die Umschaltung spürbar, umso schneller geht sie auch vonstatten. Beispielsweise kann einem solchen Wechsel ein Summenwert von 15° zugeordnet sein. Anders bei einer Umschaltung von "Sport" nach "Komfort". Dort soll der Übergang in der Übersetzung keinesfalls plötzlich, sondern harmonisch erfolgen, weshalb hier wie beschrieben und anders als bei der zuvor beschriebenen Umschaltrichtung nur Lenkradinkremente für die Synchronisierung verwendet werden, die beim Herauslenken aus der Kurve entstehen. Die Lenkradwinkelinkrementensumme ist größer zu wählen als bei der zuvor beschriebenen Umschaltrichtung, so dass kein unrundes Lenkverhalten entsteht. Der Summenwert kann hier beispielsweise 30° betragen. Denkbar ist es in diesem Zusammenhang, die Umschaltbereiche der Lenkradwinkelinkrementsummen beziehungsweise die Summenwerte selbst voneinander unabhängig einstellen zu können, gegebenenfalls auch über den Fahrer selbst, so dass dieser - natürlich nur in vorgegebenen gewissen zulässigen Grenzen - das Lenkverhalten auch selbst beeinflussen kann. Gegebenenfalls kann diese Änderung auch nur werkstattseitig zulässig sein.

Wie beschrieben dient die Lenkwinkelinkrementsumme dazu, den Umschaltvorgang sowohl lenkwinkelabhängig als auch richtungsabhängig zu definieren beziehungsweise zu begrenzen. Für den Fall, dass bei einer gegebenen Kurvenfahrt die Lenkwinkelinkrementsumme nicht erreicht wird, kommt es zwangsläufig nur zu einer unvollständigen Synchronisation, abhängig davon, welcher Ist-/Summenwert über die einzelnen Lenkradwinkelinkremente erreicht wurde. Um nun zu einer vollständigen Umschaltung zu gelangen, sind zwei unterschiedliche Möglichkeiten denkbar. Nach einer ersten kann, wenn aus der gegebenen Kurvenfahrt wieder in die Nullstellung beziehungsweise über diese hinausgelenkt wird, automatisch mit Erreichen der Null-Stellung des Lenkradwinkels die Veränderung der Winkelübersetzung vollständig erfolgen, das heißt, die noch fehlende Synchronisation wird abrupt im Null-Durchgang nachgeholt, was für den Fahrer letztlich nicht allzu sehr spürbar sein wird, nachdem der größte Teil der Synchronisation bereits vorab erfolgte. Denkbar ist es aber auch, die weiterführende Veränderung der Winkelübersetzung in Abhängigkeit der Erfassung einer Lenkradbewegung, gegebenenfalls der Lenkradwinkelinkremente bei einer Lenkradbewegung in die andere Richtung vorzunehmen. Das heißt, die fehlende Winkelinkrementsumme bis zum Erreichen des vorgegebenen Summenwerts wird aus einer Lenkradbewegung in die entgegengesetzte Richtung unmittelbar nach dem Null-Durchgang erfasst. Wurden beispielsweise im Rahmen der Inkrementaufsummierung ein Ist-Summenwert von 25° erreicht, und beträgt der zu erreichende Summenwert 30°, so wird das fehlende 5°-Winkelinkrement dann erfasst und hinzuaddiert, wenn nach einer Rücklenkung in den Null-Punkt das Lenkrad weiter in die entgegengesetzte Richtung um eben die fehlenden 5° bewegt wird. Dieses fehlende Winkelinkrement ist dann das auslösende Moment, das den letzten Schritt der Synchronisation initiiert, wobei dann mit Erreichen des vorgegebenen Summenwerts die Synchronisation abgeschlossen ist.

Neben dem erfindungsgemäßen Verfahren betrifft die Erfindung ferner ein Kraftfahrzeug umfassen ein aktives Lenksystem mit einer Steuerungseinrichtung mit wenigstens zwei fahrerseitig oder automatisch wählbaren Kennlinien oder Kennfeldern, denen unterschiedliche Winkelübersetzungen zwischen dem Lenkradwinkel des Lenkrads und dem Radlenkwinkel der für die Fahrzeuglenkung verantwortlichen Räder zugeordnet sind, und mit einer über die Steuerungseinrichtung angesteuerten Einrichtung zum Einstellen des Radlenkwinkels in Abhängigkeit der gewählten Kennlinie oder des gewählten Kennfelds. Das erfindungsgemäße Kraftfahrzeug zeichnet sich dadurch aus, dass eine Vorrichtung zum Erfassen der Bewegung des aus der Null-Stellung ausgelenkten Lenkrads und/oder ein Zeitglied zur Erfassung einer Zeitspanne nach der erfolgten Auswahl einer Kennlinie oder eines Kennfelds vorgesehen ist, und dass die Steuerungseinrichtung zur Steuerung der Einrichtung zum Einstellen des Radlenkwinkels in Abhängigkeit der erfassten Lenkradbewegung des nach dem Auswählen der Kennlinie oder des Kennfelds bewegten Lenkrads oder einer nach dem Auswählen der Kennlinie oder des Kennfelds über das Zeitglied erfassten Zeitspanne zur schrittweisen oder linearen Veränderung der Winkelübersetzung von der der vormals gewählten Kennlinie oder dem gewählten Kennfeld zugeordneten Winkelübersetzung auf die der neu gewählten Kennlinie oder dem gewählten Kennfeld zugeordnete Winkelübersetzung ausgebildet ist.

Die Einrichtung zur Erfassung der Lenkradbewegung kann in beliebiger Weise ausgeführt sein, solange sie eine exakte Bewegungserfassung und auch eine Erfassung des Lenkradwinkels beziehungsweise Lenkradwinkelinkrements bezogen auf einen vorangehenden Erfassungszeitpunkt zulässt, nachdem erfindungsgemäß ferner vorgesehen ist, dass über die Vorrichtung zur Erfassung der Lenkbewegung oder die Steuerungseinrichtung die Lenkradbewegung in Form der Lenkradwinkelinkremente erfassbar und die Einrichtung in Abhängigkeit der Lenkradwinkelinkremente über die Steuerungseinrichtung steuerbar ist. Denkbar ist die Verwendung eines entsprechenden Winkelsensors oder dergleichen.

Das Zeitglied kann ein beliebiges Zeitglied sein, das während des Umschaltvorgangs abläuft, es kann beispielsweise mit der Gabe des Umschaltsignals angestoßen werden. Über dieses Zeitglied kann je nach Ausgestaltung entweder der Beginn und Ablauf der vorbestimmten Zeitspanne, innerhalb derer die lineare Übersetzungsumschaltung erfolgt, erfasst werden, oder es können, wie erfindungsgemäß vorgesehen ist, die entsprechenden Zeitinkremente erfasst werden, gegebenenfalls in Abhängigkeit einer richtungsabhängigen Lenkradbewegung, um hieraus diejenigen Zeitinkremente zu ermitteln, die für die Summenbildung tatsächlich herangezogen werden müssen.

Zweckmäßige erfindungsgemäße Ausgestaltungen des beschriebenen Kraftfahrzeugs ergeben sich des Weiteren aus den abhängigen Unteransprüchen.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung als Teilansicht eines erfindungsgemäßen Kraftfahrzeugs,
- Fig. 2: ein Diagramm zur Darstellung der schrittweisen Winkelübersetzungsanpassung bei einer Änderung von "Komfort" auf "Sport" bei im Wesentlichen gleich bleibender Kurvenkrümmung,
- Fig. 3: ein Diagramm zur Darstellung der schrittweisen Winkelübersetzungsanpassung bei einer Änderung von "Sport" auf "Komfort" bei im Wesentlichen gleich bleibender Kurvenkrümmung,
- Fig. 4: ein Diagramm zur Darstellung der schrittweisen Winkelübersetzungsänderung bei einer Umschaltung von "Komfort" auf "Sport" bei steigender und sinkender Kurvenkrümmung,
- Fig. 5: ein Diagramm zur Darstellung der schrittweisen Winkelübersetzungsänderung bei einer Umschaltung von "Sport" auf "Komfort" bei steigender und sinkender Kurvenkrümmung,
- Fig. 6: ein Diagramm zur Darstellung der linearen und bei gegebener Richtungsabhängigkeit der Lenkradbewegung schrittweisen Winkelübersetzungsänderung bei einer Umschaltung von "Komfort" auf "Sport" bei einer zeitgesteuerten Synchronisation,
- Fig. 7: ein Diagramm zur Darstellung der Lenkwinkeländerung über die Zeit als Abhängigkeitskriterium für die anzusetzenden Zeitinkremente,
- Fig. 8: ein Diagramm zur Darstellung der linearen und bei gegebener Richtungsabhängigkeit der Lenkradbewegung schrittweisen Winkelübersetzungsänderung bei einer Umschaltung von "Sport" auf "Komfort" bei einer zeitgesteuerten Synchronisation, und
- Fig. 9: ein Diagramm zur Darstellung der Lenkwinkeländerung über die Zeit als Abhängigkeitskriterium für die anzusetzenden Zeitinkremente.

In der nachfolgenden Figurenbeschreibung wird einheitlich auf die Steuerung unter Verwendung von Kennlinien abgestellt. Die Beschreibung gilt gleichermaßen in Bezug auf eine Kennfeldsteuerung.

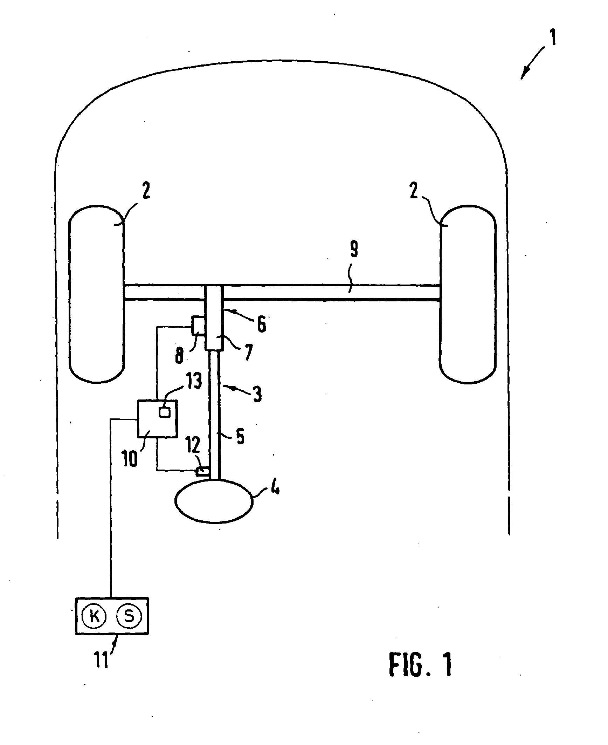

Fig. 1 zeigt ein teilweise dargestelltes erfindungsgemäßes Kraftfahrzeug 1 in Form einer Prinzipdarstellung. Gezeigt sind die beiden Vorderräder 2 sowie ein aktives Lenksystem 3, über das der Winkel der Vorderräder 2 verändert werden kann. Das Lenksystem 3 umfasst ein Lenkrad 4 mit zugeordneter Lenksäule 5, die mit einem Überlagerungsgetriebe 6 gekoppelt ist. Es sei angenommen, dass das Überlagerungsgetriebe 6 aus einem Planetengetriebe 7 und einem zugeordneten Stellmotor 8 besteht. Das Planetengetriebe 7 ist direkt mit der Lenksäule 5 gekoppelt und übersetzt den tatsächlichen Lenkwinkel des Lenkrads 4 gemäß der getriebeseitig definierten Übersetzung in eine entsprechende Lenkbewegung, die über die Lenkstange 9 auf die Räder in an sich bekannter Weise übertragen wird. Über den Stellmotor 8 ist es nun möglich, einen Überlagerungswinkel, der positiv oder negativ sein kann, dem vom Lenkrad 4 gegebenen Lenkwinkel hinzuzuaddieren, so dass im Endeffekt der resultierende Radlenkwinkel größer oder kleiner oder gleich der mechanischen Kopplung ist. Die Ansteuerung des Stellmotors 8 erfolgt über eine Steuerungseinrichtung 10, in der zwei verschiedene Kennlinien, die unterschiedlichen Fahrmodi zugeordnet sind, abgelegt sind. Im gezeigten Beispiel sei angenommen, dass eine "Komfort"-Kennlinie und eine "Sport"-Kennlinie abgelegt ist, wobei diese beiden Kennlinien über einen Wählschalter 11, wie durch die Symbole "K" und "S" dargestellt ist, separat angewählt werden. Die Steuerungseinrichtung 10 lädt die entsprechend angewählte Kennlinie ein. Jede Kennlinie definiert eine bestimmte Winkelübersetzung zwischen dem tatsächlichen Lenkwinkel, aufgebracht über das Lenkrad 4, und dem tatsächliche eingestelltem Radlenkwinkel, wie er über das Übersetzungsgetriebe 6 über die Lenkstange 9 auf die Vorderräder gegeben wird. Die Grundeigenschaften der "Komfort"-Kennlinie ist eine leichtgängige, indirekte Lenkung, während sich die "Sport"-Kennlinie durch ein straffes, direktes Lenkverhalten auszeichnet. Bei einem aktiven Lenksystem bedeutet dies, dass bei angewähltem "Komfort"-Modus der Fahrer über das Lenkrad einen im Verhältnis zum "Sport"-Modus größeren Lenkwinkel lenken muss, um die Räder in eine bestimmte Winkelstellung zu bringen, als bei gewählter "Sport"-Kennlinie, wo er weniger weit auslenken muss. Je nach gewählter Kennlinie wird nun über die Steuerungseinrichtung 10 der Stellmotor 8 so angesteuert, dass sich über das Übersetzungsgetriebe 6 das kennlinienspezifische Winkelübersetzungsverhältnis zwischen dem Ist-Lenkradwinkel und dem Ist-Radlenkwinkel einstellt. Letztlich "addiert" der Stellmotor 8 bei Anwahl der "Sport"-Kennlinie einen größeren Überlagerungswinkel zum tatsächlichen Lenkradwinkel hinzu, als bei Abarbeitung der "Komfort"-Kennlinie. Die grundsätzliche Funktionsweise eines solchen aktiven Lenksystems beziehungsweise des Überlagerungsgetriebes in Verbindung mit unterschiedlichen Kennlinien ist dem Fachmann grundsätzlich bekannt und bedarf keiner näheren Beschreibung.

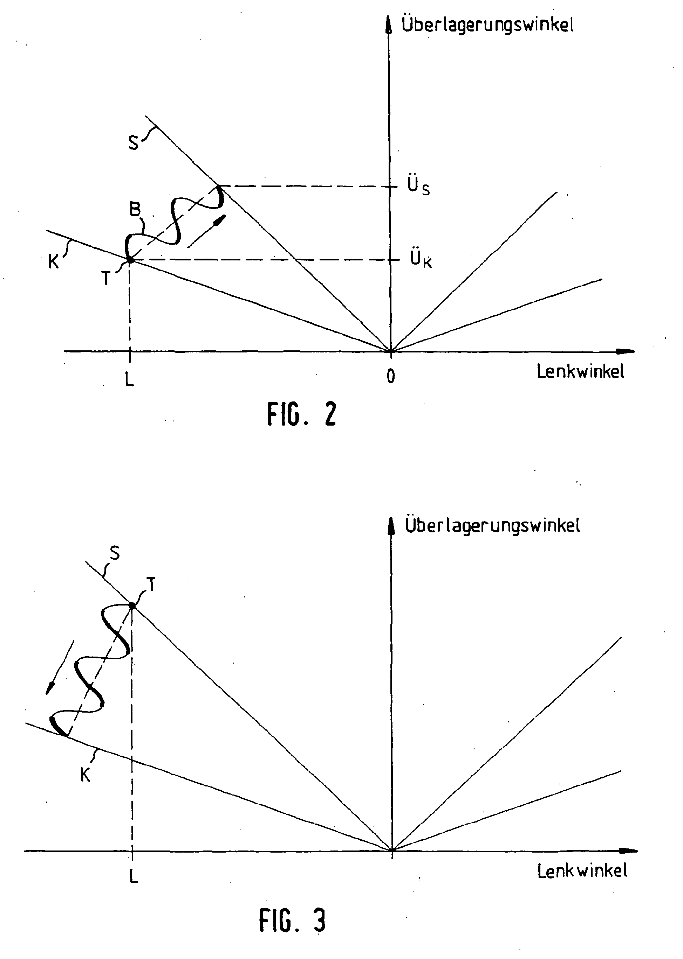

Wird nun während der Fahrt vom Fahrer durch Betätigung des Kennlinienwählschalters 11 eine andere Kennlinie gewählt, so ist über die Steuerungseinrichtung 10 von der Winkelübersetzung, die der vormals gewählten Kennlinie zugeordnet war, zur Winkelübersetzung, die der zukünftig abzuarbeitenden Kennlinie zugeordnet ist, umzuschalten. Der konkrete Umschaltvorgang wird nachfolgend anhand der Prinzipdarstellung in den Figuren 2 - 5 näher erläutert.

In Fig. 2 ist längs der Abszisse der Lenkwinkel und längs der Ordinate der Überlagerungswinkel aufgetragen, der bei einem gegebenen Lenkwinkel über den Stellmotor 8 zu überlagern ist. Dargestellt sind zwei Kennlinien, nämlich zum einen die "Komfort"-Kennlinie K und die "Sport"-Kennlinie S. Anhand dieser Kennlinien lassen sich mithin die zu einem jeweiligen Lenkwinkel zu überlagernden Überlagerungswinkel erfassen.

Fig. 2 geht von einer Situation aus, in der sich das Fahrzeug in einer Kurvenfahrt befindet. Beschrieben wird hier eine Linkskurve, nachdem das Lenkrad ausgehend von der Null-Stellung um den Lenkwinkel L nach links verdreht wurde. Zu einem bestimmten Zeitpunkt während der Kurvenfahrt wird nun der Kennlinienwechsel vom Fahrer angewählt. Die Änderung der Winkelübersetzung, die im gezeigten Beispiel dazu führen würde, dass ein beachtlich großer zusätzlicher Überlagerungswinkel über den Stellmotor 8 abrupt zu überlagern wäre, nämlich die Differenz zwischen dem "Komfort"-Überlagerungswinkel Ü_{K} und dem "Sport"-Überlagerungswinkel Ü_{S}, erfolgt hier eine schrittweise Synchronisation, hier also Erhöhung des Überlagerungswinkels. Zu diesem Zweck ist die Steuerungseinrichtung 8 mit einer Einrichtung 12 zur Erfassung der Lenkradbewegung und hier insbesondere des Lenkwinkels gekoppelt, die an der Lenksäule 5 im gezeigten Beispiel angeordnet ist. Die Steuerungseinrichtung 10 ist im Stande, anhand der Informationen, die die Einrichtung 12 liefert, kontinuierlich Lenkwinkelinkremente zu kurz aufeinander folgenden Zeitpunkten zu erfassen, die jeweils beschreiben, wie sich der Lenkradwinkel zum vorherigen Erfassungszeitpunkt geändert hat.

Im gezeigten Beispiel erfolgt nach Umschalten der Kennlinie, wie durch die wechselnde Kurve B dargestellt ist, eine die Kurvenfahrt korrigierende Lenkradbewegung ausgehend vom Lenkwinkel L das heißt, das Lenkrad wird zu Korrekturzwecken leicht in beide Richtungen gedreht. Diese Lenkradbewegungen werden nun über die Einrichtungen 12 erfasst. Die Steuerungseinrichtung 10 erfasst nun die Lenkwinkelinkremente, das heißt, sie ermittelt, um welchen Winkel das Lenkrad im Vergleich zu einem vorangehenden Zeitpunkt gedreht wurde, woraus sich auch die Drehrichtung des Lenkrads ableiten lässt.

Erfindungsgemäß werden nun, bezogen auf die Kurve B, nur solche Lenkwinkelinkremente erfasst, die in einer bestimmten Lenkrichtung liegen beziehungsweise eine bestimmte Lenkradbewegungsrichtung schreiben. Beim Umschalten von der "Komfort"-Kennlinie K auf die "Sport"-Kennlinie S sind dies nur die "positiven" Lenkwinkelinkremente, worunter hier Lenkradbewegungen und Winkelinkremente verstanden werden, die zur beziehungsweise in die Kurve gerichtet sind, über die mithin also die befahrene Kurvenkrümmung vergrößert wird. Im gezeigten Beispiel sind dies die Kurvenabschnitte, die gemäß der Kurve B beginnend im Startpunkt T zu jeweils größeren Lenkwinkeln laufen. Mit jeder erfassten "positiven" Lenkbewegung beziehungsweise jedem erfassten "positiven" Lenkwinkelinkrement, beginnend an einem rechten Scheitelpunkt der Kurve B bis zum linken Scheitelpunkt der Kurve B, wird nun der Stellmotor 8 entsprechend angesteuert, schrittweise, also inkrementenweise das Winkelübersetzungsverhältnis anzupassen, mithin also einen etwas größeren Überlagerungswinkel zu überlagern, wobei der Überlagerungswinkel mit zunehmender Anpassung bzw. Inkrementensumme bezogen auf den tatsächlichen Lenkradwinkel relativ gesehen immer größer wird, mithin also das Übersetzungsverhältnis immer kleiner wird. Die entsprechenden verwendeten Kurvenabschnitte sind in dieser Figur wie auch in allen weiteren zu Darstellungszwecken stärker gezeichnet. Auf diese Weise erfolgt eine schrittweise, sukzessive Veränderung beziehungsweise Synchronisation des Überlagerungswinkels und mithin des Winkelübersetzungsverhältnisses ausgehend von der "Komfort"-Kennlinie K zur "Sport"-Kennlinie S. Die Lenkung wird somit schrittweise immer direkter. Die Steuerungseinrichtung 10 summiert dabei kontinuierlich die erfassten Lenkwinkelinkremente auf und vergleicht die Ist-Summe kontinuierlich mit einem in ihr abgelegten Summenwert. Dieser Summenwert gibt den maximalen Summenwinkel an, mit dessen Erreichen die Umschaltung der Winkelübersetzung abgeschlossen ist. Beispielsweise beträgt dieser Summenwinkelwert bei einer Umschaltung von der "Komfort"-Kennlinie auf die "Sport"-Kennlinie 15°. Der Wechsel vom "Komfort"-Überlagerungswinkel Ü_{K} zum "Sport"-Überlagerungswinkel Ü_{S} wird also über die schrittweisen Erhöhungen so erfolgen, dass er mit Erreichen der maximalen Lenkwinkelinkrementensumme von 15° abgeschlossen ist. Sollte der Summenwert über die aufsummierten Lenkwinkelinkremente während der gegebenen Kurvenfahrt nicht erreicht werden, erfolgt keine vollständige Synchronisation, vielmehr wird die Synchronisation unterbrochen, es liegt also nur eine Teilsynchronisation vor. Wird das Lenkrad, wenn die Straße wieder gerade verläuft, in die Null-Stellung bewegt, ist es denkbar, mit Erreichen der Null-Stellung die Restsynchronisation vorzunehmen und den noch fehlenden Überlagerungswinkel seitens der Steuerungseinrichtung 10 und dem Stellmotor 8 zu addieren. Denkbar wäre es aber auch, das noch fehlende Winkelinkrement, das von der Ist-Inkrementensumme zum Summenwert fehlt, bei einer Lenkradbewegung in die Entgegengesetzte Richtung aufzunehmen und den fehlenden Überlagerungswinkel also dann hinzuzuaddieren, wenn das Lenkrad über die Null-Stellung hinaus in die andere Richtung bewegt wird.

Insgesamt ergibt sich also eine schritt- oder stufenweise Anpassung der Winkelübersetzung beziehungsweise des Winkelverhältnisses über den Stellmotor 8 in Abhängigkeit der Lenkradbewegung, welche Anpassung richtungsselektiv bezüglich der Lenkradbewegung erfolgt und innerhalb eines gewissen, von der Lenkradbewegung abhängigen Zeitfensters vonstatten geht.

Fig. 3 zeigt den umgekehrten Fall. Hier wird von der "Sport"-Kennlinie S auf die "Komfort"-Kennlinie K umgeschaltet. Im Zeitpunkt T erfolgt diese Kennlinien Umschaltung. Auch hier befindet sich das Fahrzeug in einer Kurvenfahrt, die Kurvenkrümmung ist im Wesentlichen konstant, die Lenkbewegung startet pendelnd beim Lenkwinkel L. Hier werden als Lenkwinkelinkremente über die Einrichtung 12 beziehungsweise die Steuerungseinrichtung 10 nur diejenigen erfasst, die "negativ" sind, die also durch das Herauslenken aus einer Kurve entstehen, wenn also mithin das Lenkrad zur Null-Stellung bewegt wird, anders als bei Fig. 2, wo nur die Bewegungen und Inkremente berücksichtigt werden, bei denen das Lenkrad vom Null-Punkt wegbewegt wird. Auch hier erfolgt eine sukzessive schrittweise Anpassung der Winkelübersetzung und damit der Kennlinienumschaltung, die verwendeten Kurvenabschnitte sind stärker gezeichnet. Hier ist es denkbar, einen größeren Inkrementen-Summenwert von beispielsweise 30° zuzuordnen, nachdem in diesem Fall die Umschaltung nicht so schnell vonstatten gehen muss, wie bei einer gewünschten Umschaltung von "Komfort" nach "Sport", wo der Fahrer unmittelbar das straffere Lenkverhalten spüren möchte. Auch hier gilt, dass bei Nichterreichen des steuerungseinrichtungsseitig abgelegten Summenwerts der noch fehlende Übergangswinkel, der hier negativ ist, bei Erreichen der Null-Stellung hinzuaddiert wird, beziehungsweise in Abhängigkeit einer erfassten Lenkbewegung beziehungsweise der erfassten Lenkwinkelinkremente in die entgegengesetzte Drehrichtung hinzuaddiert wird.

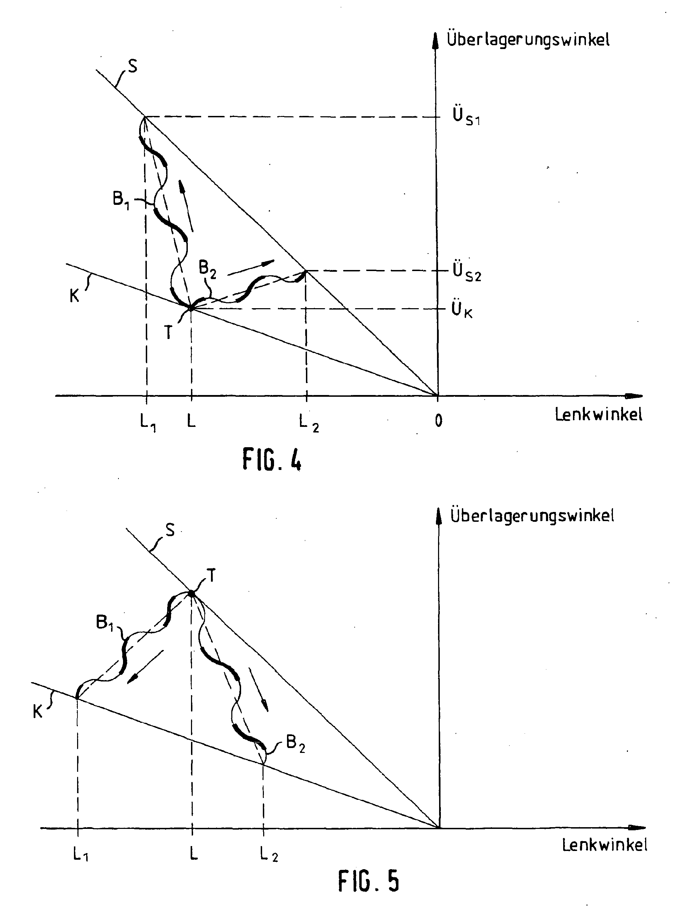

Während die Figuren 2 und 3 die Situation beschreiben, bei denen die Kurvenkrümmung im Wesentlichen konstant bleibt und das Lenkrad ausgehend vom Lenkwinkel L pendelt, zeigt Fig. 4 ein Diagramm, bei dem die Verhältnisse für eine Kurvenfahrt mit steigender Krümmung und für eine Kurvenfahrt mit fallender Krümmung dargestellt sind, jeweils bezogen auf einen Umschaltvorgang von der "Komfort"-Kennlinie K auf die "Sport"-Kennlinie S. Im Zeitpunkt T bei gegebenen Lenkwinkel L findet die Kennlinienumschaltung statt. Im linken Teil des Diagramms ist die Situation mit steigender Kurvenkrümmung dargestellt, wenn also die Kurve enger wird. Dies erfordert es, dass der Fahrer das Lenkrad stärker einschlägt, so dass sich im Endeffekt der Lenkwinkel von L auf L₁ ändert. Die Lenkradbewegung ist über die Kurve B₁ dargestellt. Ersichtlich weist sie primär positive Lenkwinkelanteile auf. Der Überlagerungswinkel ist in diesem Fall deutlich vom "Komfort"-Überlagerungswinkel Ü_{K} zum "Sport"-Überlagerungswinkel Ü_{S1} anzuheben, verglichen mit der Situation gemäß Fig. 2, nachdem dem Lenkwinkel L₁ ein größerer "Sport"-Überlagerungswinkel Ü_{S1} zugeordnet ist. Auch hier werden nur die "positiven" Lenkwinkelinkremente, also die Inkremente, die bei einem Weglenken von der Null-Stellung gegeben sind, zur Anpassung berücksichtigt. Ist auch hier der Summenwert erreicht, ist die Übersetzungsanpassung und damit die Umschaltung abgeschlossen.

Im rechten Teil der Figur ist die Situation für eine fallende Kurvenkrümmung dargestellt. Hier ist das Lenkrad vom Lenkwinkel L zum Lenkwinkel L₂ deutlich zurückzulenken. Ersichtlich zeigt hier die Kurve B₂ im Wesentlichen "negative" Anteile. Gleichwohl werden auch hier für die Änderung des Überlagerungswinkels von Ü_{K} zum "Sport"-Überlagerungswinkel Ü_{S2} nur die positiven Winkelinkremente verwendet. In diesem Fall kann es vorkommen, dass die Aufsummierung der positiven Lenkwinkelinkremente bis zum Erreichen des zugeordneten Summenwerts länger dauert, da infolge des fallenden Krümmungsradius primär "negative" Lenkbewegungen zum Null-Punkt hin gegeben sind. Sollte während der Kurvenfahrt der Summenwert nicht erreicht werden, folgt auch hier die Vervollständigung der schrittweisen Synchronisation mit Erreichen des Null-Durchgangs beziehungsweise dem Bewegen des Lenkrads in die entgegengesetzte Richtung.

Fig. 5 zeigt schließlich das vergleichbare Beispiel zur Fig. 4, jedoch bei einer Umschaltung von der "Sport"-Kennlinie S auf die "Komfort"-Kennlinie K. Bei zunehmendem Krümmungsradius der Kurve ist das Lenkrad von der vormaligen Winkelstellung L zum Lenkwinkel L₁ deutlich zu drehen, ersichtlich kommt es gemäß der Kurve B1 auch hier zu Korrekturen. Nachdem hier aber von der "Sport"-Kennlinie auf die "Komfort"-Kennlinie umgeschaltet wird, werden hier nur die "negativen" Winkelinkremente, die aus einer Lenkradbewegung zum Null-Punkt hin resultieren, verwendet. Die Lenkradbewegung hat hier jedoch primär "positive" Anteile, nachdem der Lenkwinkel von L auf L₁ zu erhöhen ist.

Bei fallendem Krümmungsradius ist der Lenkwinkel L auf den Lenkwinkel L₂ zu erniedrigen, es ist also primär zur Null-Stellung hinzulenken. Die dabei entstehenden korrigierenden Lenkbewegungen, hier dargestellt durch die Kurve B2, weisen hier primär "negative" Richtungsanteile auf, so dass die zu berücksichtigenden Winkelinkremente überwiegen und der zugeordnete Summenwert und damit die vollständige Umschaltung relativ schnell erreicht wird.

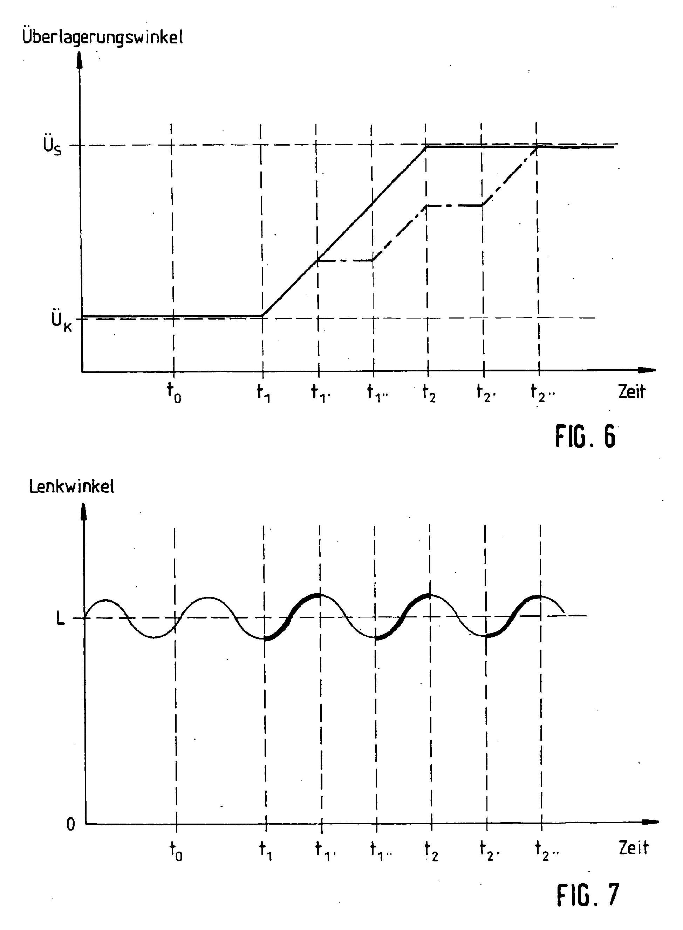

Fig. 6 zeigt ein Diagramm, bei dem längs der Ordinate der Überlagerungslenkwinkel und längs der Abszisse die Zeit aufgetragen ist, aus welchem Diagramm die grundsätzliche Vorgehensweise bei einer zeitgesteuerten Synchronisation der Winkelübersetzung bei einer Kennlinien- oder Kennfeldumschaltung hervorgeht. Das dargestellte Diagramm zeigt den Fall eines Umschaltens vom "Komfort"- in den "Sport"-Modus. Zunächst wird bis zum Zeitpunkt t₀ die Kennlinie oder das Kennfeld des "Komfort"-Modus abgearbeitet. Im Zeitpunkt t₀ wählt der Fahrer den "Sport"-Modus an. Mit einer (optionalen) kurzen zeitlichen Verzögerung zwischen t₀ und t₁ beginnt zum Zeitpunkt t₁, wie hier durch die ausgezogene lineare Kurve dargestellt ist, der Umschaltvorgang, der innerhalb der fest vorgegebenen Zeitspanne zwischen t₁ - t₂ abgeschlossen ist. Innerhalb dieser vorgegebenen Zeitspanne, die zwischen 0,5 - 2 Sekunden betragen sollte, erfolgt die komplette Umschaltung des Übersetzungsverhältnisses. Nach t₂ wird ausschließlich mit dem "Sport"-Überlagerungswinkel Üₛ gearbeitet, mithin also die nunmehr gewählte "Sport"-Kennlinie oder das "Sport"-Kennfeld zur Lenkunterstützung berücksichtigt.

Zum Erfassen der Zeitspanne ist, siehe Fig. 1, in der Steuerungseinrichtung ein Zeitglied 13 vorgesehen, das automatisch bei Gabe des Umschaltsignals zum Zeitpunkt t₀ angestoßen wird. Steuerungsseitig sind entsprechende Algorithmen zur Definition der Verzögerungszeit zwischen t₀ - t₁ sowie die vorgegebene Zeitspanne t₁ - t₂ hinterlegt, wobei, worauf nachfolgend noch eingegangen wird, diese vorgegebene Zeitspanne auch abhängig von dem gewählten Moduswechsel ist.

Fig. 7 zeigt ein Diagramm, bei dem längs der Ordinate der Lenkwinkel und längs der Abszisse die Zeit aufgetragen ist. Anhand dieses Diagramms in Verbindung mit der gestrichelten Kurvendarstellung in Fig. 6 wird nachfolgend die schrittweise zeitinkrementenabhängige Synchronisation dargestellt.

Wie sich aus Fig. 7 ergibt, schwankt der Lenkwinkel infolge der korrigierenden Lenkradbewegungen primär um den Ausgangslenkwinkel L. Auch hier sind die entsprechenden Zeitpunkte wie in Fig. 6 längs der Abszisse eingetragen. Zum Zeitpunkt t₀ erfolgt die Modusumschaltung, jedoch läuft noch bis zum Zeitpunkt t₁ die Verzögerungsdauer. Erst ab dem Zeitpunkt t₁ besteht generell die Möglichkeit, Zeitinkremente aufzusummieren, sofern während dieser Zeitinkremente, die beispielsweise 1/100 Sekunde betragen, eine Lenkradbewegung in die vorgegebene Richtung (bei einer Umschaltung von "Komfort"-Modus auf den "Sport"-Modus nur die positiven, in die Kurve lenkenden Bewegungen) erfolgt. Im gezeigten Ausführungsbeispiel beginnt zum Zeitpunkt t₁ eine solche Lenkradbewegung, die im Zeitpunkt t_{1'} abgeschlossen ist, anschließend lenkt der Fahrer wieder zurück. Alle innerhalb der Zeitspanne t₁ - t'₁ ablaufenden Zeitinkremente, erfasst über das Zeitglied bzw. die Steuerungseinrichtung, werden nun aufsummiert und der Summenwert - wie einleitend beschrieben gegebenenfalls noch gewichtet in Abhängigkeit der Fahrgeschwindigkeit oder der Lenkradbewegung - wird dem zugeordneten Vergleichssummenwert zur Verhältnisberechnung gegenübergestellt, in Abhängigkeit welches Vergleichs dann die schrittweise Umschaltung erfolgt. Dies ist auch aus Fig. 6 ersichtlich, wo innerhalb der Zeitspanne t₁ - t'₁ ein erster Synchronisationsschritt erfolgt, das heißt, ausgehend vom "Komfort"-Überlagerungswinkel Ü_{K} erfolgt eine Winkelvergrößerung.

Zwischen t'₁ - t"₁ erfolgt eine Lenkradbewegung in die entgegen gesetzte Richtung, die währenddessen ablaufenden Zeitinkremente werden zur Summation nicht berücksichtigt. Infolgedessen erfolgt auch, siehe Fig. 6, innerhalb dieser Zeitspanne kein Änderungsüberlagerungswinkel, er bleibt konstant. Erst in der Zeitspanne zwischen t"₁ - t₂ kommt es wieder zu "positiven" Lenkbewegungen, währenddessen ablaufende Zeitinkremente werden wiederum zur Summation berücksichtigt, entsprechend nimmt auch der Überlagerungslenkwinkel, siehe Fig. 6, zu.

Zwischen t₂ - t'₂ erfolgt wiederum eine Lenkradbewegung in die "falsche" Richtung, es kommt zu keinem Änderungsüberlagerungslenkwinkel. Erst zwischen t'₂ - t"₂ kommt es wieder zu einer Lenkradbewegung in die "richtige" Richtung, die Zeitinkremente werden entsprechend aufsummiert. Im gezeigten Beispiel wird davon ausgegangen, dass spätestens mit Ablauf von t"₂ der zugeordnete Vergleichssummenwert erreicht und infolgedessen die Umschaltung vollständig erfolgt ist.

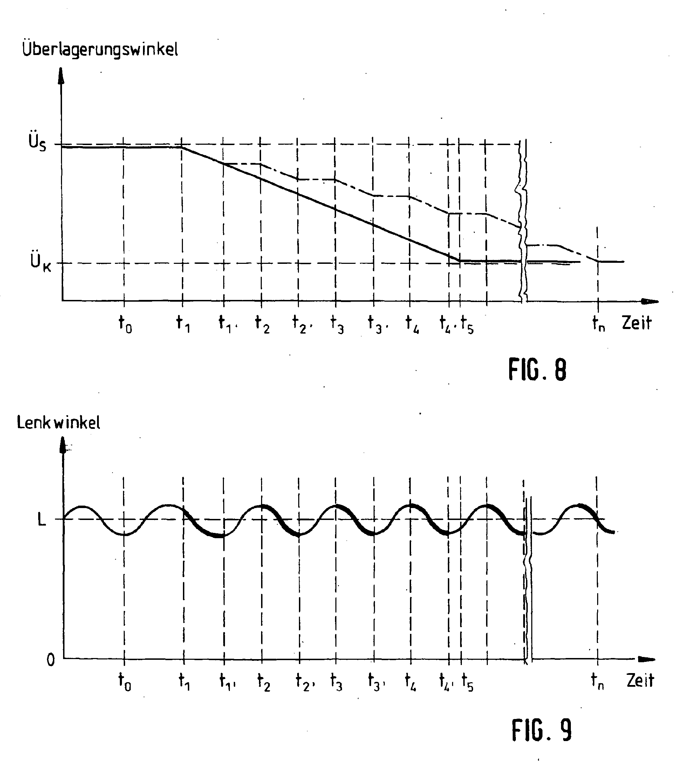

In entsprechender Weise zeigen die Figuren 8 und 9 die Vorgehensweise bei einer Umschaltung vom "Sport"-Modus in den "Komfort"-Modus. Hier erfolgt also eine Änderung vom "Sport"-Überlagerungswinkel Ü_{S} auf den "Komfort"-Überlagerungswinkel Üₖ bzw. eine entsprechende Übersetzungsverhältnisänderung.

Wie in Fig. 8 durch die durchgezogene Linie dargestellt ist, ist auch hier eine lineare Verhältnisänderung innerhalb einer fest vorgegebenen Zeitspanne möglich. Diese Zeitspanne ist deutlich länger, verglichen mit dem Ausführungsbeispiel nach Fig. 6. Sie beträgt beispielsweise 3 - 5 Sekunden. Auch hier sei angenommen, dass zum Zeitpunkt t₀ die Modusänderung angewählt wird. Nach der Verzögerung bis zum Zeitpunkt t₁ erfolgt die lineare Übersetzungsverhältnisänderung, die innerhalb der Zeitspanne bis zum Zeitpunkt t₅ abgeschlossen ist.

Fig. 9 in Verbindung mit der gestrichelten Kurve gemäß Fig. 8 zeigt nun in entsprechender Weise wie die Figuren 6 und 7 die Zeitinkrement-gesteuerte Synchronisation. Auch hier ist längs der Ordinate der Lenkwinkel und längs der Abszisse die Zeit aufgetragen. Der Lenkwinkel schwankt auch hier wiederum um den Basislenkwinkel L. Hier werden jedoch nur Zeitinkremente berücksichtigt, während welcher Lenkradbewegungen in die entgegensetzte Richtung wie bezüglich Fig. 7 beschrieben, mithin also aus der Kurve heraus erfolgen. Ersichtlich erfolgt eine solche Lenkradbewegung zwischen t₁ - t'₁, was in einer entsprechenden abnehmenden Winkelstufe in Fig. 8 zum Ausdruck kommt. Zwischen t'₁ - t₂ erfolgt wieder eine entgegen gesetzte Lenkbewegung, es kommt zu keiner Aufsummation entsprechender Zeitinkremente, während zwischen t₂ - t'₂ erneut eine Lenkradbewegung in die "richtige" Richtung erfolgt und die dabei ablaufenden Zeitinkremente wiederum aufsummiert werden. Dies setzt sich so lange fort, bis zu einem späteren Zeitpunkt tₙ der entsprechende Vergleichssummenwert zur Zeitinkrementsumme erreicht ist. Dieser Vergleichssummenwert ist, nachdem hier der Umschaltvorgang langsamer vonstatten gehen soll, größer als der Zeitinkrement-Vergleichssummenwert, der der Umschaltung gemäß den Figuren 6 und 7 zugrunde liegt.

## Patentansprüche

1. Verfahren zum kennlinienabhängigen Variieren der Winkelübersetzung zwischen einem Lenkradwinkel eines Lenkrads und dem Radlenkwinkel der für die Fahrzeuglenkung verantwortlichen Räder eines Kraftfahrzeugs mit einem aktiven Lenksystem mit einer über eine Steuerungseinrichtung gesteuerten Einrichtung zum Einstellen des Radlenkwinkels in Abhängigkeit des Lenkradwinkels, wobei die Steuerungseinrichtung die Einrichtung zum Einstellen des Radlenkwinkels in Abhängigkeit wenigstens zweier Kennlinien, denen unterschiedliche Winkelübersetzungen zwischen dem Lenkradwinkel und dem Radlenkwinkel zugeordnet sind, steuert, und wobei automatisch oder vom Fahrer manuell eine der Kennlinien auswählbar ist,
**dadurch gekennzeichnet,**
**dass** nach Auswahl einer der weiteren Steuerung zugrunde zu legenden Kennlinie bei gegebener Auslenkung des Lenkrads aus der Nullstellung die Einrichtung zum Einstellen des Radlenkwinkels in Abhängigkeit der erfassten Lenkradbewegung des nach dem Auswählen der Kennlinie bewegten Lenkrads oder einer nach dem Auswählen der Kennlinie erfassten Zeitspanne zur schrittweisen oder linearen Veränderung der Winkelübersetzung von der der vormals gewählten Kennlinie zugeordneten Winkelübersetzung auf die der neu gewählten Kennlinie zugeordnete Winkelübersetzung angesteuert wird.

2. Verfahren zum kennfeldabhängigen Variieren der Winkelübersetzung zwischen einem Lenkradwinkel eines Lenkrads und dem Radlenkwinkel der für die Fahrzeuglenkung verantwortlichen Räder eines Kraftfahrzeugs mit einem aktiven Lenksystem mit einer über eine Steuerungseinrichtung gesteuerten Einrichtung zum Einstellen des Radlenkwinkels in Abhängigkeit des Lenkradwinkels, wobei die Steuerungseinrichtung die Einrichtung zum Einstellen des Radlenkwinkels in Abhängigkeit wenigstens zweier Kennfelder, denen unterschiedliche Winkelübersetzungen zwischen dem Lenkradwinkel und dem Radlenkwinkel zugeordnet sind, steuert, und wobei automatisch oder vom Fahrer manuell eines der Kennfelder auswählbar ist,
**dadurch gekennzeichnet,**
**dass** nach Auswahl eines der weiteren Steuerung zugrunde zu legenden Kennfelds bei gegebener Auslenkung des Lenkrads aus der Nullstellung die Einrichtung zum Einstellen des Radlenkwinkels in Abhängigkeit der erfassten Lenkradbewegung des nach dem Auswählen des Kennfelds bewegten Lenkrads oder einer nach dem Auswählen des Kennfelds erfassten Zeitspanne zur schrittweisen oder linearen Veränderung der Winkelübersetzung von der dem vormals gewählten Kennfeld zugeordneten Winkelübersetzung auf die dem neu gewählten Kennfeld zugeordnete Winkelübersetzung angesteuert wird.

3. Verfahren nach Anspruch 1 oder 2,
**dadurch gekennzeichnet,**
**dass** die Lenkradbewegung als Lenkradwinkelinkremente erfasst und die Einrichtung in Abhängigkeit der Lenkradwinkelinkremente angesteuert wird.

4. Verfahren nach einem der vorangehenden Ansprüche,
**dadurch gekennzeichnet,**
**dass** zum schrittweisen Verändern der Winkelübersetzung nur solche Lenkradbewegungen oder Lenkwinkelinkremente verwendet werden, die in eine vorbestimmte Bewegungsrichtung erfolgen bzw. eine Lenkradbewegung in eine vorbestimmten Richtung beschreiben.

5. Verfahren nach Anspruch 4,
**dadurch gekennzeichnet,**
**dass** bei einer Änderung von der Kennlinie oder dem Kennfeld mit der größeren Winkelübersetzung auf die Kennlinie oder das Kennfeld mit der kleineren Winkelübersetzung nur Lenkradbewegungen oder Lenkwinkelinkremente berücksichtigt werden, die den Radlenkwinkel vergrößern, während bei einer Änderung von der Kennlinie oder dem Kennfeld mit der kleineren Winkelübersetzung auf die Kennlinie oder das Kennfeld mit der größeren Winkelübersetzung nur Lenkradbewegungen oder Lenkwinkelinkremente berücksichtigt werden, die den Radlenkwinkel verkleinern.

6. Verfahren nach einem der Ansprüche 3 bis 5,
**dadurch gekennzeichnet,**
**dass** die für eine vollständige Änderung der Winkelübersetzung zu erreichende Summe der kontinuierlich aufsummierten erfassten Lenkradwinkelinkremente bei einer Änderung von der Kennlinie oder dem Kennfeld mit der kleineren Winkelübersetzung auf die Kennlinie oder das Kennfeld mit der größeren Winkelübersetzung größer ist, als bei einer Änderung von der Kennlinie oder dem Kennfeld mit der größeren Winkelübersetzung auf die Kennlinie oder das Kennfeld mit der kleineren Winkelübersetzung.

7. Verfahren nach einem der Ansprüche 1 oder 2,
**dadurch gekennzeichnet,**
**dass** nach erfolgter Auswahl einer neuen Kennlinie oder eines neuen Kennfelds die Veränderung der Winkelübersetzung innerhalb einer vorbestimmten Zeitspanne erfolgt.

8. Verfahren nach einem der Ansprüche 1 oder 2,
**dadurch gekennzeichnet,**
**dass** die Zeitspanne in Form einzelner Zeitinkremente erfasst und die Einrichtung in Abhängigkeit der aufsummierten Zeitinkremente angesteuert wird.

9. Verfahren nach Anspruch 8,
**dadurch gekennzeichnet,**
**dass** zum schrittweisen Verändern der Winkelübersetzung nur solche Zeitinkremente verwendet werden, während welcher eine Lenkradbewegung in einer vorbestimmten Richtung erfolgt.

10. Verfahren nach Anspruch 9,
**dadurch gekennzeichnet, dass**
dass bei einer Änderung von der Kennlinie oder dem Kennfeld mit der kleineren Winkelübersetzung auf die Kennlinie oder das Kennfeld mit der größeren Winkelübersetzung nur solche Zeitinkremente berücksichtigt werden, die aus Lenkradbewegungen resultieren, die den Radlenkwinkel verkleinern, während bei einer Änderung von der Kennlinie oder dem Kennfeld mit der größeren Winkelübersetzung auf die Kennlinie oder das Kennfeld mit der kleineren Winkelübersetzung nur solche Zeitinkremente berücksichtigt werden, die aus Lenkradbewegungen resultieren, die den Radlenkwinkel vergrößern.

11. Verfahren nach einem der Ansprüche 8 bis 10,
**dadurch gekennzeichnet, dass**
dass die für eine vollständige Änderung der Winkelübersetzung zu erreichende Summe der kontinuierlich aufsummierten erfassten Zeitinkremente bei einer Änderung von der Kennlinie oder dem Kennfeld mit der kleineren Winkelübersetzung auf die Kennlinie oder das Kennfeld mit der größeren Winkelübersetzung größer ist, als bei einer Änderung von der Kennlinie oder dem Kennfeld mit der größeren Winkelübersetzung auf die Kennlinie oder das Kennfeld mit der kleineren Winkelübersetzung.

12. Verfahren nach einem der vorangehenden Ansprüche,
**dadurch gekennzeichnet,**
**dass** die Veränderung der Winkelübersetzung gegebenenfalls zusätzlich in Abhängigkeit der Geschwindigkeit der Lenkbewegung und/oder der Fahrzeuggeschwindigkeit und/oder des absoluten Lenkradwinkels erfolgt.

13. Verfahren nach einem der vorangehenden Ansprüche,
**dadurch gekennzeichnet,**
**dass** bei einem erfassten Nulldurchgang des Lenkradwinkels die Veränderung der Winkelübersetzung vollständig erfolgt, oder dass die weiterführende Veränderung der Winkelübersetzung in Abhängigkeit der Erfassung einer Lenkradbewegung, gegebenenfalls der Lenkradwinkelinkremente oder der Zeitinkremente bei einer Lenkradbewegung in die andere Richtung erfolgt.

14. Kraftfahrzeug umfassend ein aktives Lenksystem mit einer Steuerungseinrichtung mit wenigstens zwei fahrerseitig oder automatisch wählbaren Kennlinien, denen unterschiedliche Winkelübersetzungen zwischen dem Lenkradwinkel des Lenkrads und dem Radlenkwinkel der Vorderräder zugeordnet sind, und mit einer über die Steuerungseinrichtung angesteuerten Einrichtung zum Einstellen des Radlenkwinkels in Abhängigkeit der gewählten Kennlinie,
**dadurch gekennzeichnet,**
**dass** eine Vorrichtung (12) zum Erfassen der Bewegung des aus der Nullstellung ausgelenkten Lenkrads (4) und/oder ein Zeitglied (13) zur Erfassung einer Zeitspanne nach der erfolgten Auswahl einer Kennlinie vorgesehen ist, und dass die Steuerungseinrichtung (10) zur Steuerung der Einrichtung (8) zum Einstellen des Radlenkwinkels in Abhängigkeit der erfassten Lenkradbewegung des nach dem Auswählen der Kennlinie bewegten Lenkrads (4) oder einer nach dem Auswählen der Kennlinie über das Zeitglied (13) erfassten Zeitspanne zur schrittweisen oder linearen Veränderung der Winkelübersetzung von der der vormals gewählten Kennlinie zugeordneten Winkelübersetzung auf die der neu gewählten Kennlinie zugeordnete Winkelübersetzung ausgebildet ist.

15. Kraftfahrzeug umfassend ein aktives Lenksystem mit einer Steuerungseinrichtung mit wenigstens zwei fahrerseitig oder automatisch wählbaren Kennfeldern, denen unterschiedliche Winkelübersetzungen zwischen dem Lenkradwinkel des Lenkrads und dem Radlenkwinkel der Vorderräder zugeordnet sind, und mit einer über die Steuerungseinrichtung angesteuerten Einrichtung zum Einstellen des Radlenkwinkels in Abhängigkeit des gewählten Kennfelds,
**dadurch gekennzeichnet,**
**dass** eine Vorrichtung (12) zum Erfassen der Bewegung des aus der Nullstellung ausgelenkten Lenkrads (4) und/oder ein Zeitglied (13) zur Erfassung einer Zeitspanne nach der erfolgten Auswahl eines Kennfelds vorgesehen ist, und dass die Steuerungseinrichtung (10) zur Steuerung der Einrichtung (8) zum Einstellen des Radlenkwinkels in Abhängigkeit der erfassten Lenkradbewegung des nach dem Auswählen des Kennfelds bewegten Lenkrads (4) oder einer nach dem Auswählen des Kennfelds über das Zeitglied (13) erfassten Zeitspanne zur schrittweisen oder linearen Veränderung der Winkelübersetzung von der dem vormals gewählten Kennfeld zugeordneten Winkelübersetzung auf die dem neu gewählten Kennfeld zugeordnete Winkelübersetzung ausgebildet ist.

16. Kraftfahrzeug nach einem der Ansprüche 14 oder 15,
**dadurch gekennzeichnet,**
**dass** über die Vorrichtung (12) zur Erfassung der Lenkbewegung oder die Steuerungseinrichtung (10) die Lenkradbewegung als Lenkradwinkelinkremente erfassbar und die Einrichtung (8) in Abhängigkeit der Lenkradwinkelinkremente über die Steuerungseinrichtung (10) steuerbar ist.

17. Kraftfahrzeug nach einem der Ansprüche 14 bis 16,
**dadurch gekennzeichnet,**
**dass** die Steuerungseinrichtung (10) zum schrittweisen Verändern der Winkelübersetzung nur in Abhängigkeit solche Lenkradbewegungen oder Lenkwinkelinkremente, die in eine vorbestimmte Bewegungsrichtung erfolgen bzw. eine Lenkradbewegung in eine vorbestimmten Richtung beschreiben, ausgebildet ist.

18. Kraftfahrzeug nach Anspruch 17,
**dadurch gekennzeichnet,**
**dass** die Steuerungseinrichtung (10) bei einer Änderung von der Kennlinie (S) oder dem Kennfeld mit der kleineren Winkelübersetzung auf die Kennlinie (K) oder das Kennfeld mit der größeren Winkelübersetzung zur ausschließlichen Berücksichtigung von Lenkradbewegungen oder Lenkwinkelinkremente, die den Radlenkwinkel verkleinern, und bei einer Änderung von der Kennlinie (K) oder dem Kennfeld mit der größeren Winkelübersetzung auf die Kennlinie (S) oder das Kennfeld mit der kleineren Winkelübersetzung zur ausschließlichen Berücksichtigung von Lenkradbewegungen oder Lenkwinkelinkremente, die den Radlenkwinkel vergrößern, ausgebildet ist.

19. Kraftfahrzeug nach einem der Ansprüche 14 oder 15,
**dadurch gekennzeichnet, dass**
dass die Einrichtung (8) zum Einstellen des Radlenkwinkels über die Steuerungseinrichtung (10) derart ansteuerbar ist, dass die Änderung der Winkelübersetzung innerhalb einer über das Zeitglied (13) erfassbaren vorbestimmten Zeitspanne erwirkbar ist.

20. Kraftfahrzeug nach einem der Ansprüche 14 oder 15,
**dadurch gekennzeichnet,**
**dass** über das Zeitglied (13) oder die Steuerungseinrichtung (10) während nach der Auswahl einer Kennlinie oder eines Kennfelds erfolgender Lenkradbewegungen Zeitinkremente erfassbar und die Einrichtung (8) in Abhängigkeit der Zeitinkremente über die Steuerungseinrichtung (10) steuerbar ist.

21. Kraftfahrzeug nach Anspruch 20,
**dadurch gekennzeichnet,**
**dass** die Steuerungseinrichtung (10) zum schrittweisen Verändern der Winkelübersetzung nur in Abhängigkeit solcher Zeitinkremente, während welcher eine Lenkradbewegung in eine vorbestimmte Richtung erfolgt, ausgebildet ist.

22. Kraftfahrzeug nach Anspruch 21,
**dadurch gekennzeichnet,**
**dass** die Steuerungseinrichtung (10) bei einer Änderung von der Kennlinie (S) mit der kleineren Winkelübersetzung auf die Kennlinie (K) mit der größeren Winkelübersetzung zur ausschließlichen Berücksichtigung von Zeitinkremente, die während Lenkradbewegungen, die den Radlenkwinkel verkleinern, erfasst wurden, und bei einer Änderung von der Kennlinie (K) mit der größeren Winkelübersetzung auf die Kennlinie (S) mit der kleineren Winkelübersetzung zur ausschließlichen Berücksichtigung von Zeitinkremente, die während Lenkradbewegungen, die den Radlenkwinkel vergrößern, erfasst wurden, ausgebildet ist.

23. Kraftfahrzeug nach einem der Ansprüche 20 bis 22,
**dadurch gekennzeichnet,**
**dass** in der Steuerungseinrichtung (10) zwei unterschiedliche und für eine vollständige Änderung der Winkelübersetzung zu erreichende Summenwerte der kontinuierlich aufsummierten erfassten Lenkradwinkelinkremente oder Zeitinkremente abgelegt sind, wobei der einer Änderung von der Kennlinie (S) oder dem Kennfeld mit der kleineren Winkelübersetzung auf die Kennlinie (K) oder das Kennfeld mit der größeren Winkelübersetzung zugeordnete Summenwert größer ist, als der einer Änderung von der Kennlinie (K) oder dem Kennfeld mit der größeren Winkelübersetzung auf die Kennlinie (S) oder das Kennfeld mit der kleineren Winkelübersetzung zugeordnete Summenwert.

24. Kraftfahrzeug nach einem der Ansprüche 14 bis 23,
**dadurch gekennzeichnet,**
**dass** die Steuerungseinrichtung (10) zum Verändern der Winkelübersetzung gegebenenfalls zusätzlich in Abhängigkeit der Geschwindigkeit der Lenkbewegung oder der Fahrzeuggeschwindigkeit ausgebildet ist.

25. Kraftfahrzeug nach einem der Ansprüche 14 bis 24,
**dadurch gekennzeichnet,**
**dass** die Steuerungseinrichtung (10) zur vollständigen Veränderung der Winkelübersetzung bei einem erfassten Nulldurchgang des Lenkradwinkels oder in Abhängigkeit der Erfassung einer Lenkradbewegung, gegebenenfalls der Lenkradwinkelinkremente oder Zeitinkremente bei einer Lenkradbewegung in die andere Richtung ausgebildet ist.

## Claims

1. Method for the characteristic-curve-dependent variation of the angle transmission ratio between a steering wheel angle of a steering wheel and the wheel steer angle of the wheels, which are responsible for vehicle steering, of a motor vehicle having an active steering system with a device, which is controlled by means of a control device, for adjusting the wheel steer angle as a function of the steering wheel angle, the control device controlling the device so as to adjust the wheel steer angle as a function of at least two characteristic curves which are assigned different angle transmission ratios between the steering wheel angle and the wheel steer angle, and it being possible for one of the characteristic curves to be selected automatically or manually by the driver,
**characterized**
**in that**, after the selection of a characteristic curve to be used as a basis for the further control takes place at a given deflection of the steering wheel from the zero position, the device for adjusting the wheel steer angle is actuated, as a function of the measured steering wheel movement of the steering wheel moved after the selection of the characteristic curve or as a function of a time period measured after the selection of the characteristic curve, in order to change the angle transmission ratio in a stepped or linear fashion from the angle transmission ratio assigned to the previously selected characteristic curve to the angle transmission ratio assigned to the newly selected characteristic curve.

2. Method for the characteristic-map-dependent variation of the angle transmission ratio between a steering wheel angle of a steering wheel and the wheel steer angle of the wheels, which are responsible for vehicle steering, of a motor vehicle having an active steering system with a device, which is controlled by means of a control device, for adjusting the wheel steer angle as a function of the steering wheel angle, the control device controlling the device so as to adjust the wheel steer angle as a function of at least two characteristic maps which are assigned different angle transmission ratios between the steering wheel angle and the wheel steer angle, and it being possible for one of the characteristic maps to be selected automatically or manually by the driver,
**characterized**
**in that**, after the selection of a characteristic map to be used as a basis for the further control takes place at a given deflection of the steering wheel from the zero position, the device for adjusting the wheel steer angle is actuated, as a function of the measured steering wheel movement of the steering wheel moved after the selection of the characteristic map or as a function of a time period measured after the selection of the characteristic map, in order to change the angle transmission ratio in a stepped or linear fashion from the angle transmission ratio assigned to the previously selected characteristic map to the angle transmission ratio assigned to the newly selected characteristic map.

3. Method according to Claim 1 or 2,
**characterized**
**in that** the steering wheel movement is measured as steering wheel angle increments and the device is actuated as a function of the steering wheel angle increments.

4. Method according to one of the preceding claims,
**characterized**
**in that**, for the stepped change of the angle transmission ratio, use is made only of steering wheel movements or steer angle increments which take place in a predetermined movement direction or describe a steering wheel movement in a predetermined direction.

5. Method according to Claim 4,
**characterized**
**in that**, in the event of a change from the characteristic curve or the characteristic map with the larger angle transmission ratio to the characteristic curve or the characteristic map with the smaller angle transmission ratio, only steering wheel movements or steer angle increments which increase the wheel steer angle are taken into consideration, whereas in the event of a change from the characteristic curve or the characteristic map with the smaller angle transmission ratio to the characteristic curve or the characteristic map with the larger angle transmission ratio, only steering wheel movements or steer angle increments which decrease the wheel steer angle are taken into consideration.

6. Method according to one of Claims 3 to 5,
**characterized**
**in that** the sum, which must be attained for a complete change of the angle transmission ratio, of the continuously summated measured steering wheel angle increments is larger in the event of a change from the characteristic curve or the characteristic map with the smaller angle transmission ratio to the characteristic curve or the characteristic map with the larger angle transmission ratio than in the event of a change from the characteristic curve or the characteristic map with the larger angle transmission ratio to the characteristic curve or the characteristic map with the smaller angle transmission ratio.

7. Method according to either of Claims 1 and 2,
**characterized**
**in that**, after the selection of a new characteristic curve or of a new characteristic map has taken place, the change of the angle transmission ratio takes place within a predetermined time period.

8. Method according to either of Claims 1 and 2,
**characterized**
**in that** the time period is measured in the form of individual time increments, and the device is actuated as a function of the summated time increments.

9. Method according to Claim 8,
**characterized**
**in that**, for the stepped change of the angle transmission ratio, use is made only of time increments during which a steering wheel movement takes place in a predetermined direction.

10. Method according to Claim 9,
**characterized**
**in that**, in the event of a change from the characteristic curve or the characteristic map with the smaller angle transmission ratio to the characteristic curve or the characteristic map with the larger angle transmission ratio, only time increments which result from steering wheel movements which decrease the wheel steer angle are taken into consideration, whereas in the event of a change from the characteristic curve or the characteristic map with the larger angle transmission ratio to the characteristic curve or the characteristic map with the smaller angle transmission ratio, only time increments which result from steering wheel movements which increase the wheel steer angle are taken into consideration.

11. Method according to one of Claims 8 to 10,
**characterized**
**in that** the sum, which must be attained for a complete change of the angle transmission ratio, of the continuously summated measured time increments is larger in the event of a change from the characteristic curve or the characteristic map with the smaller angle transmission ratio to the characteristic curve or the characteristic map with the larger angle transmission ratio than in the event of a change from the characteristic curve or the characteristic map with the larger angle transmission ratio to the characteristic curve or the characteristic map with the smaller angle transmission ratio.

12. Method according to one of the preceding claims,
**characterized**
**in that** the change of the angle transmission ratio takes place if appropriate additionally as a function of the speed of the steering movement and/or as a function of the vehicle speed and/or as a function of the absolute steering wheel angle.

13. Method according to one of the preceding claims,
**characterized**
**in that** the complete change of the angle transmission ratio takes place in the event of a zero crossing of the steering wheel angle being detected, or in that the continuing change of the angle transmission ratio takes place as a function of the measurement of a steering wheel movement, if appropriate of the steering wheel angle increments or of the time increments during a steering wheel movement in the other direction.

14. Motor vehicle comprising an active steering system having a control device with at least two characteristic curves which can be selected by a driver or automatically and which are assigned different angle transmission ratios between the steering wheel angle of the steering wheel and the wheel steer angle of the front wheels, and having a device, which is actuated by means of the control device, for adjusting the wheel steer angle as a function of the selected characteristic curve,
**characterized**
**in that** a device (12) is provided for measuring the movement of the steering wheel (4) deflected out of the zero position and/or a timing element (13) is provided for measuring a time period after the selection of a characteristic curve has taken place, and in that the control device (10) is designed to control the device (8) in order to adjust the wheel steer angle as a function of the measured steering wheel movement of the steering wheel (4) moved after the selection of the characteristic curve, or as a function of a time period measured after the selection of the characteristic curve by means of the timing element (13), in order to change the angle transmission ratio in a stepped or linear fashion from the angle transmission ratio assigned to the previously selected characteristic curve to the angle transmission ratio assigned to the newly selected characteristic curve.

15. Motor vehicle comprising an active steering system having a control device with at least two characteristic maps which can be selected by a driver or automatically and which are assigned different angle transmission ratios between the steering wheel angle of the steering wheel and the wheel steer angle of the front wheels, and having a device, which is actuated by means of the control device, for adjusting the wheel steer angle as a function of the selected characteristic map,
**characterized**
**in that** a device (12) is provided for measuring the movement of the steering wheel (4) deflected out of the zero position and/or a timing element (13) is provided for measuring a time period after the selection of a characteristic map has taken place, and in that the control device (10) is designed to control the device (8) in order to adjust the wheel steer angle as a function of the measured steering wheel movement of the steering wheel (4) moved after the selection of the characteristic map, or as a function of a time period measured after the selection of the characteristic map by means of the timing element (13), in order to change the angle transmission ratio in a stepped or linear fashion from the angle transmission ratio assigned to the previously selected characteristic map to the angle transmission ratio assigned to the newly selected characteristic map.

16. Motor vehicle according to either of Claims 14 and 15,
**characterized**
**in that** the steering wheel movement can be measured as steering wheel angle increments by means of the device (12) for measuring the steering movement or by means of the control device (10), and the device (8) can be controlled by means of the control device (10) as a function of the steering wheel angle increments.

17. Motor vehicle according to one of Claims 14 to 16,
**characterized**
**in that** the control device (10) is designed to change the angle transmission ratio in a stepped fashion as a function only of steering wheel movements or steer angle increments which take place in a predetermined movement direction or which describe a steering wheel movement in a predetermined direction.

18. Motor vehicle according to Claim 17,
**characterized**
**in that** the control device (10) is designed such that, in the event of a change from the characteristic curve (S) or the characteristic map with the smaller angle transmission ratio to the characteristic curve (K) or the characteristic map with the larger angle transmission ratio, it takes into consideration only steering wheel movements or steer angle increments which decrease the wheel steer angle, whereas in the event of a change from the characteristic curve (K) or the characteristic map with the larger angle transmission ratio to the characteristic curve (S) or the characteristic map with the smaller angle transmission ratio, it takes into consideration only steering wheel movements or steer angle increments which increase the wheel steer angle.

19. Motor vehicle according to either of Claims 14 and 15,
**characterized**
**in that** the device (8) for adjusting the wheel steer angle can be actuated by means of the control device (10) in such a way that the change of the angle transmission ratio can be effected within a predetermined time period which can be measured by means of the timing element (13).

20. Motor vehicle according to either of Claims 14 and 15,
**characterized**
**in that** time increments can be measured by means of the timing element (13) or the control device (10) during steering wheel movements taking place after the selection of a characteristic curve or characteristic map, and the device (8) can be controlled by means of the control device (10) as a function of the time increments.

21. Motor vehicle according to Claim 20,
**characterized**
**in that** the control device (10) is designed to change the angle transmission ratio in a stepped fashion as a function only of time increments during which a steering wheel movement takes place in a predetermined direction.

22. Motor vehicle according to Claim 21,
**characterized**
**in that** the control device (10) is designed such that, in the event of a change from the characteristic curve (S) with the smaller angle transmission ratio to the characteristic curve (K) with the larger angle transmission ratio, it takes into consideration only time increments which were measured during steering wheel movements which decrease the wheel steer angle, and in the event of a change from the characteristic curve (K) with the larger angle transmission ratio to the characteristic curve (S) with the smaller angle transmission ratio, it takes into consideration only time increments which were measured during steering wheel movements which increase the wheel steer angle.

23. Motor vehicle according to one of Claims 20 to 22,
**characterized**
**in that** the control device (10) has stored in it two different sum values, which must be attained for a complete change of the angle transmission ratio, of the continuously summated measured steering wheel angle increments or time increments, the sum value assigned to a change from the characteristic curve (S) or the characteristic map with the smaller angle transmission ratio to the characteristic curve (K) or the characteristic map with the larger angle transmission ratio being greater than the sum value assigned to a change from the characteristic curve (K) or the characteristic map with the larger angle transmission ratio to the characteristic curve (S) or the characteristic map with the smaller angle transmission ratio.

24. Motor vehicle according to one of Claims 14 to 23,
**characterized**
**in that** the control device (10) is designed to change the angle transmission ratio if appropriate additionally as a function of the speed of the steering movement or as a function of the vehicle speed.

25. Motor vehicle according to one of Claims 14 to 24,
**characterized**
**in that** the control device (10) is designed to completely change the angle transmission ratio in the event of a zero crossing of the steering wheel angle being detected or as a function of the measurement of a steering wheel movement, if appropriate of the steering wheel angle increments or time increments during a steering wheel movement in the other direction.

## Revendications

1. Procédé pour faire varier, en fonction d'une courbe caractéristique, la conversion angulaire entre un angle de volant de direction d'un volant de direction et l'angle de braquage des roues d'un véhicule automobile responsables de la direction du véhicule, comprenant un système de direction actif avec un dispositif, commandé par le biais d'un dispositif de commande, pour l'ajustement de l'angle de braquage des roues en fonction de l'angle du volant de direction, le dispositif de commande commandant le dispositif pour l'ajustement de l'angle de braquage des roues en fonction d'au moins deux courbes caractéristiques, auxquelles sont associées des conversions angulaires différentes entre l'angle du volant de direction et l'angle de braquage des roues, et l'une des courbes caractéristiques pouvant être sélectionnée automatiquement ou manuellement par le conducteur,
**caractérisé en ce**
**qu'**après la sélection d'une courbe caractéristique à utiliser comme base pour la commande subséquente, dans le cas d'une déviation donnée du volant de direction par rapport à la position zéro, le dispositif pour l'ajustement de l'angle de braquage des roues est commandé en fonction du mouvement détecté du volant de direction déplacé après la sélection de la courbe caractéristique ou d'un intervalle de temps détecté après la sélection de la courbe caractéristique en vue de modifier par degrés ou de manière linéaire la conversion angulaire de la conversion angulaire associée à la courbe caractéristique sélectionnée préalablement à la conversion angulaire associée à la courbe caractéristique nouvellement sélectionnée.

2. Procédé pour faire varier, en fonction d'un champ caractéristique, la conversion angulaire entre un angle de volant de direction d'un volant de direction et l'angle de braquage des roues d'un véhicule automobile responsables de la direction du véhicule, comprenant un système de direction actif avec un dispositif, commandé par le biais d'un dispositif de commande, pour l'ajustement de l'angle de braquage des roues en fonction de l'angle du volant de direction, le dispositif de commande commandant le dispositif pour l'ajustement de l'angle de braquage des roues en fonction d'au moins deux champs caractéristiques, auxquels sont associées des conversions angulaires différentes entre l'angle du volant de direction et l'angle de braquage des roues, et l'un des champs caractéristiques pouvant être sélectionné automatiquement ou manuellement par le conducteur, **caractérisé en ce**
**qu'**après la sélection d'un champ caractéristique à utiliser comme base pour la commande subséquente, dans le cas d'une déviation donnée du volant de direction par rapport à la position zéro, le dispositif pour l'ajustement de l'angle de braquage des roues est commandé en fonction du mouvement détecté du volant de direction déplacé après la sélection du champ caractéristique ou d'un intervalle de temps détecté après la sélection du champ caractéristique en vue de modifier par degrés ou de manière linéaire la conversion angulaire de la conversion angulaire associée au champ caractéristique sélectionné préalablement à la conversion angulaire associée au champ caractéristique nouvellement sélectionné.

3. Procédé selon la revendication 1 ou 2,
**caractérisé en ce que**
le mouvement du volant de direction est détecté en tant qu'incréments d'angle de volant de direction et le dispositif est commandé en fonction des incréments d'angle de volant de direction.

4. Procédé selon l'une quelconque des revendications précédentes,
**caractérisé en ce que**
pour faire varier par degrés la conversion angulaire, on n'utilise que les mouvements du volant de direction ou les incréments d'angle de direction qui se produisent dans un sens de mouvement prédéterminé ou qui décrivent un mouvement du volant de direction dans un sens prédéterminé.

5. Procédé selon la revendication 4,
**caractérisé en ce que**
dans le cas d'une variation de la courbe caractéristique ou du champ caractéristique ayant la plus grande conversion angulaire à la courbe caractéristique ou au champ caractéristique ayant la plus petite conversion angulaire, on ne tient compte que des mouvements du volant de direction ou des incréments d'angle de direction qui augmentent l'angle de braquage des roues, tandis que dans le cas d'une variation de la courbe caractéristique ou du champ caractéristique ayant la plus petite conversion angulaire à la courbe caractéristique ou au champ caractéristique ayant la plus grande conversion angulaire, on ne tient compte que des mouvements du volant de direction ou des incréments d'angle de direction qui réduisent l'angle de braquage des roues.

6. Procédé selon l'une quelconque des revendications 3 à 5,
**caractérisé en ce que**
la somme des incréments d'angle de volant de direction détectés additionnés en continu, à atteindre pour une variation complète de la conversion angulaire, dans le cas d'une variation de la courbe caractéristique ou du champ caractéristique ayant la plus petite conversion angulaire à la courbe caractéristique ou au champ caractéristique ayant la plus grande conversion angulaire est supérieure à la somme dans le cas d'une variation de la courbe caractéristique ou du champ caractéristique ayant la plus grande conversion angulaire à la courbe caractéristique ou au champ caractéristique ayant la plus petite conversion angulaire.

7. Procédé selon l'une quelconque des revendications 1 ou 2,
**caractérisé en ce**
**qu'**après qu'une sélection d'une nouvelle courbe caractéristique ou d'un nouveau champ caractéristique a été effectuée, la variation de la conversion angulaire a lieu dans un intervalle de temps prédéterminé.

8. Procédé selon l'une quelconque des revendications 1 ou 2,
**caractérisé en ce que**
l'intervalle de temps est détecté sous forme d'incréments temporels discrets et le dispositif est commandé en fonction des incréments temporels additionnés.

9. Procédé selon la revendication 8,
**caractérisé en ce que**
pour la variation par degrés de la conversion angulaire, on n'utilise que les incréments temporels pendant lesquels a lieu un mouvement du volant de direction dans un sens prédéterminé.

10. Procédé selon la revendication 9,
**caractérisé en ce que**
dans le cas d'une variation de la courbe caractéristique ou du champ caractéristique ayant la plus petite conversion angulaire à la courbe caractéristique ou au champ caractéristique ayant la plus grande conversion angulaire, on ne tient compte que des incréments temporels qui résultent de mouvements du volant de direction qui réduisent l'angle de braquage des roues, tandis que dans le cas d'une variation de la courbe caractéristique ou du champ caractéristique ayant la plus grande conversion angulaire à la courbe caractéristique ou au champ caractéristique ayant la plus petite conversion angulaire, on ne tient compte que des incréments temporels qui résultent de mouvements du volant de direction qui augmentent l'angle de braquage des roues.

11. Procédé selon l'une quelconque des revendications 8 à 10,
**caractérisé en ce que**
la somme des incréments temporels détectés additionnés en continu, à atteindre pour une variation complète de la conversion angulaire, dans le cas d'une variation de la courbe caractéristique ou du champ caractéristique ayant la plus petite conversion angulaire à la courbe caractéristique ou au champ caractéristique ayant la plus grande conversion angulaire est supérieure à la somme dans le cas d'une variation de la courbe caractéristique ou du champ caractéristique ayant la plus grande conversion angulaire à la courbe caractéristique ou au champ caractéristique ayant la plus petite conversion angulaire.

12. Procédé selon l'une quelconque des revendications précédentes,
**caractérisé en ce que**
la variation de la conversion angulaire a lieu éventuellement en outre en fonction de la vitesse du mouvement de direction et/ou de la vitesse du véhicule et/ou de l'angle du volant de direction absolu.

13. Procédé selon l'une quelconque des revendications précédentes,
**caractérisé en ce que**
dans le cas d'un passage à zéro détecté de l'angle du volant de direction, la variation de la conversion angulaire se produit de manière complète, ou **en ce que** la variation poursuivie de la conversion angulaire s'effectue en fonction de la détection d'un mouvement du volant de direction, éventuellement des incréments d'angle de volant de direction ou des incréments temporels, dans le cas d'un mouvement du volant de direction dans l'autre sens.

14. Véhicule automobile comprenant un système de direction actif avec un dispositif de commande avec au moins deux courbes caractéristiques pouvant être sélectionnées automatiquement ou par le conducteur, auxquelles sont associées des conversions angulaires différentes entre l'angle de volant de direction du volant de direction et l'angle de braquage des roues avant, et avec un dispositif commandé par le biais du dispositif de commande pour l'ajustement de l'angle de braquage des roues en fonction de la courbe caractéristique sélectionnée,
**caractérisé en ce**
**qu'**il est prévu un dispositif (12) pour détecter le mouvement du volant de direction (4) dévié par rapport à la position zéro et/ou un organe de temporisation (13) pour détecter un intervalle de temps après que la sélection d'une courbe caractéristique a été effectuée, et en ce que le dispositif de commande (10) est réalisé pour la commande du dispositif (8) pour l'ajustement de l'angle de braquage des roues en fonction du mouvement du volant de direction détecté du volant de direction (4) déplacé après la sélection de la courbe caractéristique, ou d'un intervalle de temps détecté après la sélection de la courbe caractéristique par le biais de l'organe de temporisation (13) en vue de la variation par degrés ou linéaire de la conversion angulaire de la conversion angulaire associée à la courbe caractéristique sélectionnée préalablement à la conversion angulaire associée à la courbe caractéristique nouvellement sélectionnée.

15. Véhicule automobile comprenant un système de direction actif avec un dispositif de commande avec au moins deux champs caractéristiques pouvant être sélectionnés automatiquement ou par le conducteur, auxquels sont associées des conversions angulaires différentes entre l'angle de volant de direction du volant de direction et l'angle de braquage des roues avant, et avec un dispositif commandé par le biais du dispositif de commande pour l'ajustement de l'angle de braquage des roues en fonction du champ caractéristique sélectionné,
**caractérisé en ce**
**qu'**il est prévu un dispositif (12) pour détecter le mouvement du volant de direction (4) dévié par rapport à la position zéro et/ou un organe de temporisation (13) pour détecter un intervalle de temps après que la sélection d'un champ caractéristique a été effectuée, et en ce que le dispositif de commande (10) est réalisé pour la commande du dispositif (8) pour l'ajustement de l'angle de braquage des roues en fonction du mouvement du volant de direction détecté du volant de direction (4) déplacé après la sélection du champ caractéristique, ou d'un intervalle de temps détecté après la sélection du champ caractéristique par le biais de l'organe de temporisation (13) en vue de la variation par degrés ou linéaire de la conversion angulaire de la conversion angulaire associée au champ caractéristique sélectionné préalablement à la conversion angulaire associée au champ caractéristique nouvellement sélectionné.

16. Véhicule automobile selon l'une quelconque des revendications 14 ou 15,
**caractérisé en ce que**
le mouvement du volant de direction peut être détecté en tant qu'incréments d'angle de volant de direction par le biais du dispositif (12) pour détecter le mouvement de direction ou du dispositif de commande (10), et le dispositif (8) peut être commandé en fonction des incréments d'angle de volant de direction par le biais du dispositif de commande (10).

17. Véhicule automobile selon l'une quelconque des revendications 14 à 16,
**caractérisé en ce que**
le dispositif de commande (10) est réalisé pour faire varier par degrés la conversion angulaire seulement en fonction des mouvements du volant de direction ou des incréments d'angle de direction qui se produisent dans un sens de déplacement prédéterminé, ou qui décrivent un mouvement du volant de direction dans un sens prédéterminé.

18. Véhicule automobile selon la revendication 17,
**caractérisé en ce que**
le dispositif de commande (10) est réalisé, dans le cas d'une variation de la courbe caractéristique (S) ou du champ caractéristique ayant la plus petite conversion angulaire à la courbe caractéristique (K) ou au champ caractéristique ayant la plus grande conversion angulaire, pour tenir compte exclusivement des mouvements du volant de direction ou des incréments d'angle de direction qui réduisent l'angle de braquage des roues, et dans le cas d'une variation de la courbe caractéristique (K) ou du champ caractéristique ayant la plus grande conversion angulaire à la courbe caractéristique (S) ou au champ caractéristique ayant la plus petite conversion angulaire, pour tenir compte exclusivement des mouvements du volant de direction ou des incréments d'angle de direction qui augmentent l'angle de braquage des roues.

19. Véhicule automobile selon l'une quelconque des revendications 14 ou 15,
**caractérisé en ce que**
le dispositif (8) pour l'ajustement de l'angle de braquage des roues peut être commandé par le biais du dispositif de commande (10) de telle sorte que la variation de la conversion angulaire puisse être produite dans un intervalle de temps prédéterminé pouvant être détecté par le biais de l'organe de temporisation (13).

20. Véhicule automobile selon l'une quelconque des revendications 14 ou 15,
**caractérisé en ce que**
des incréments temporels peuvent être détectés par le biais de l'organe de temporisation (13) ou du dispositif de commande (10) pendant des mouvements du volant de direction s'effectuant après la sélection d'une courbe caractéristique ou d'un champ caractéristique, et le dispositif (8) peut être commandé en fonction des incréments temporels par le biais du dispositif de commande (10).

21. Véhicule automobile selon la revendication 20,
**caractérisé en ce que**
le dispositif de commande (10) est réalisé pour faire varier par degrés la conversion angulaire seulement en fonction des incréments temporels pendant lesquels un mouvement du volant de direction a lieu dans un sens prédéterminé.

22. Véhicule automobile selon la revendication 21,
**caractérisé en ce que**
le dispositif de commande (10) est réalisé, dans le cas d'une variation de la courbe caractéristique (S) ayant la plus petite conversion angulaire à la courbe caractéristique (K) ayant la plus grande conversion angulaire, pour tenir compte exclusivement d'incréments temporels qui ont été détectés pendant des mouvements du volant de direction qui réduisent l'angle de braquage des roues, et dans le cas d'une variation de la courbe caractéristique (K) ayant la plus grande conversion angulaire à la courbe caractéristique (S) ayant la plus petite conversion angulaire, pour tenir compte exclusivement d'incréments temporels qui ont été détectés pendant des mouvements du volant de direction qui augmentent l'angle de braquage des roues.

23. Véhicule automobile selon l'une quelconque des revendications 20 à 22,
**caractérisé en ce que**
dans le dispositif de commande (10) sont saisies deux valeurs de somme différentes des incréments d'angle de volant de direction ou des incréments temporels détectés et additionnés en continu, et devant être atteintes pour une variation complète de la conversion angulaire, la valeur de somme associée à une variation de la courbe caractéristique (S) ou du champ caractéristique ayant la plus petite conversion angulaire à la courbe caractéristique (K) ou au champ caractéristique ayant la plus grande conversion angulaire étant supérieure à la valeur de somme associée à une variation de la courbe caractéristique (K) ou du champ caractéristique ayant la plus grande conversion angulaire à la courbe caractéristique (S) ou au champ caractéristique ayant la plus petite conversion angulaire.

24. Véhicule automobile selon l'une quelconque des revendications 14 à 23,
**caractérisé en ce que**
le dispositif de commande (10) est réalisé pour faire varier la conversion angulaire éventuellement en outre en fonction de la vitesse du mouvement de direction ou de la vitesse du véhicule.

25. Véhicule automobile selon l'une quelconque des revendications 14 à 24,
**caractérisé en ce que**
le dispositif de commande (10) est réalisé pour faire varier complètement la conversion angulaire dans le cas d'un passage à zéro détecté de l'angle du volant de direction ou en fonction de la détection d'un mouvement du volant de direction, éventuellement des incréments d'angle de volant de direction ou des incréments temporels, dans le cas d'un mouvement du volant de direction dans l'autre sens.
